# EUROPÄISCHE PATENTANMELDUNG

(11) **EP 4 760 475 A1**
(43) Veröffentlichungstag der Anmeldung: **17.06.2026**
(21) Anmeldenummer: 25159863.7
(22) Anmeldetag: 25.02.2025
(51) Int. Cl.: G06F 3/06, B60W 50/00, B60W 60/00

(54) **VERFAHREN ZUR DURCHFÜHRUNG EINER DATENAUFZEICHNUNG, VERFAHREN ZUR ERZEUGUNG EINES DATENSTROMS, VORRICHTUNGEN ZUR DATENVERARBEITUNG, COMPUTERPROGRAMMPRODUKT, SIGNALFOLGE UND SPEICHERMEDIUM**

(30) Priorität: 13.12.2024 DE 102024137656
(71) Anmelder: dSPACE SE & Co. KG, 33102 Paderborn (DE)
(72) Erfinder: Meyer, Björn, 33102 Paderborn (DE)

(57) **Zusammenfassung**

Die vorliegende Erfindung betrifft ein Verfahren zur Durchführung einer Datenaufzeichnung. Die vorliegende Erfindung betrifft außerdem ein Verfahren zur Erzeugung eines Datenstroms aus, insbesondere mit einem solchen Datenaufzeichnungs-Verfahren, über zumindest zwei Speichermedien oder Quelldateien verteilt gespeicherte elementare Dateneinheiten. Die vorliegende Erfindung betrifft auch Vorrichtungen zur Datenverarbeitung, ein Computerprogrammprodukt, eine Signalfolge und ein Speichermedium.

## Beschreibung

### Bezeichnung der Erfindung

Verfahren zur Durchführung einer Datenaufzeichnung, Verfahren zur Erzeugung eines Datenstroms, Vorrichtungen zur Datenverarbeitung, Computerprogrammprodukt, Signalfolge und Speichermedium.

### Gebiet der Technik

Die vorliegende Erfindung betrifft ein Verfahren zur Durchführung einer Datenaufzeichnung. Die vorliegende Erfindung betrifft außerdem ein Verfahren zur Erzeugung eines Datenstroms aus über zumindest zwei Speichermedien oder Quelldateien verteilt gespeicherten elementaren Dateneinheiten, die insbesondere mit einem solchen Datenaufzeichnungs-Verfahren erzeugt sind. Die vorliegende Erfindung betrifft auch Vorrichtungen zur Datenverarbeitung, ein Computerprogrammprodukt, eine Signalfolge und ein Speichermedium.

### Stand der Technik

Die datengetriebene Entwicklung von Anwendungen für Fahrerassistenzsysteme (ADAS) und autonomes Fahren (AD) erfordert den Einsatz möglichst realistischer Fahrzeug- und Umgebungsdaten. Um diese zu erhalten, werden während Testfahrten Sensordaten von beispielsweise Lidar-, Radar- und Kamerasensoren mit sehr hoher Bandbreite eingelesen und für die spätere Verwendung abgespeichert.

Um die dazu nötige Bandbreite für eine simultane Aufzeichnung mehrerer Datenströme von unterschiedlichen Sensoren bereitstellen zu können, ist in der Vergangenheit beispielsweise ein Raid-Controller dazu eingesetzt worden, um die eintreffenden Daten im RAID0-Modus redundanzfrei auf mehrere Festplatten verteilt zu speichern. Diese Lösung hat sich bisher auch prinzipiell bewährt. Allerdings ist ein solcher Raid-Controller vergleichsweise teuer und trägt einen wesentlichen Anteil an den Kosten für ein entsprechendes System zur Datenaufzeichnung bei.

### Zusammenfassung der Erfindung

Es ist daher Aufgabe der vorliegenden Erfindung, die beschriebenen Nachteile des Stands der Technik zu überwinden und insbesondere Mittel anzugeben, mit denen eine simultane Aufzeichnung mehrerer Datenströme mit hoher Bandbreite von unterschiedlichen Quellen in kostengünstiger, aber dennoch einfacher und zuverlässiger Weise möglich ist.

Die Aufgabe wird durch die Erfindung gemäß einem **ersten Aspekt** dadurch gelöst, dass ein Verfahren zur Durchführung einer Datenaufzeichnung vorgeschlagen wird, wobei zumindest ein Datenstrom zur Aufzeichnung dessen Daten empfangen wird und darunter zumindest ein spezifischer Datenstrom ist, wobei jeder spezifische Datenstrom basierend auf einer für den jeweiligen spezifischen Datenstrom vorgegebenen Datenstrom-Beschreibung in elementare Dateneinheiten aufgeteilt wird, und die elementaren Dateneinheiten aller spezifischen Datenströme auf zumindest zwei Speichermedien verteilt gespeichert werden.

Der Erfindung liegt damit die Erkenntnis zugrunde, dass die empfangenen spezifischen Datenströme jeweils in Bezug auf eine oder mehrere Eigenschaften in hohem Maße vorhersagbar sind. Durch den Einsatz von Datenstrom-Beschreibungen der spezifischen Datenströme kann dieses Vorwissen bei der Aufteilung der spezifischen Datenströme in elementare Dateneinheiten einbezogen werden. Gleichzeitig sind damit auch Informationen zu der Menge an erhaltenen elementaren Dateneinheiten pro Datenstrom und Zeiteinheit und somit zu der insgesamt pro Zeiteinheit empfangenen und abzuspeichernden Datenmenge im Voraus bekannt oder jedenfalls zumindest teilweise ermittelbar.

Dadurch können zumindest teilweise basierend auf und/oder ausgehend von den Datenstrom-Beschreibungen Ressourcen für die Verarbeitung und Speicherung der Daten der spezifischen Datenströme im Voraus koordiniert werden. Beispielsweise können Speicherbereiche (etwa in einem Arbeitsspeicher) für ein Zwischenspeichern von empfangenen Daten (insbesondere Daten einzelner elementarer Dateneinheiten) vorab geplant, passend (etwa hinsichtlich Speichergröße und/oder zeitlicher Verfügbarkeit) dimensioniert und/oder reserviert werden. Alternativ oder ergänzend können damit für die erwarteten verteilt zu speichernden elementaren Dateneinheiten Speicherbereiche auf den einzelnen Speichermedien und/oder Bandbreiten für den Schreibzugriff auf die einzelnen Speichermedien zumindest implizit geplant, passend dimensioniert und/oder zugeteilt werden.

Durch diese zumindest teilweise Vorhersagbarkeit der empfangenen und zu speichernde Datenmenge, kann auf die Fähigkeit eines Raid-Controllers, eintreffende Daten dynamisch an Festplatten zuzuteilen, verzichtet werden. Dadurch kann mit dem vorgeschlagenen Verfahren die Datenaufzeichnung vorteilhaft ohne den Einsatz eines Raid-Controllers durchgeführt werden. Die herkömmlicherweise mit dem Rad-Controller verbundenen Kosten lassen sich dadurch einsparen.

Besonders vorteilhaft kann vorgesehen sein, dass das verteilte Speichern der elementaren Dateneinheiten zumindest zeitweise mittels eines zeitlich parallelen Schreibzugriffs auf die zumindest zwei Speichermedien durchgeführt wird. Vorteilhaft wird währenddessen auf jedem der zumindest zwei Speichermedien jeweils eine andere elementare Dateneinheit gespeichert. Beispielsweise wird eine erste elementare Dateneinheit eines ersten spezifischen Datenstroms auf einem ersten Speichermedium der zumindest zwei Speichermedien gespeichert und zeitlich parallel wird eine zweite elementare Dateneinheit (entweder des ersten spezifischen Datenstroms oder eines zweiten spezifischen Datenstroms) auf einem zweiten Speichermedium der zumindest zwei Speichermedien gespeichert. Durch den parallelen Schreibzugriff können auch die Daten spezifischer Datenströme mit hoher Bandbreite zuverlässig, und insbesondere in Echtzeit, gespeichert werden. Denn die zulässige Gesamtbandbreite in Bezug auf die empfangenen spezifischen Datenströme kann dann vorteilhaft linear mit den Bandbreiten (für den Schreibzugriff) der einzelnen Speichermedien skalieren. Beispielsweise können bei S Speichermedien, die jeweils während eines Speichervorgangs einen Schreibzugriff mit einer maximalen Datenrate von R [Bit/Sekunde] zulassen, die empfangenen spezifischen Datenströme theoretisch in Summe eine Datenrate von S*R aufweisen. Durch das Vorsehen mehrere Speichermedien, auf die ein paralleler Schreibzugriff erfolgt, kann daher die zulässige maximale Gesamtdatenrate der spezifischen Datenströme erhöht werden.

Unter "Echtzeit" wird im Sinne dieser Anmeldung verstanden, dass die Zeitspanne zwischen dem Eintreffen einer ersten elementaren Dateneinheit des Datenstroms und dem Eintreffen einer unmittelbar nachfolgenden zweiten elementaren Dateneinheit desselben Datenstroms, also die Periodenlänge der elementaren Dateneinheiten des Datenstroms, länger ist als die Zeitspanne zwischen dem Eintreffen der ersten elementaren Dateneinheit und dem Abschluss des Speichervorgangs der ersten elementaren Dateneinheit auf einem Speichermedium. Beispielsweise lässt sich anhand der Datenstrom-Beschreibung und/oder einer anderen technischen Beschreibung der Datenströme (etwa in Bezug auf die Eintrefffrequenz und die Größe der elementaren Dateneinheiten) und/oder der Schreibgeschwindigkeit der Speichermedien überprüfen, ob diese Echtzeit-Bedingung erfüllt bzw. erfüllbar ist oder nicht.

Aufgrund der vergleichsweise einfachen Implementierbarkeit des vorgeschlagenen Verfahrens lassen sich auch herkömmliche Speicher-Lösungen besonders leicht entsprechend anpassen, und können dadurch von den beschriebenen Vorteilen, insbesondere von den Kosteneinsparungen, profitieren. Das macht das vorgeschlagene Verfahren wirtschaftlich besonders interessant.

Vorzugsweise werden die elementaren Dateneinheiten aller spezifischen Datenströme auf zwei, auf drei, auf vier, auf fünf oder auf mehr als fünf (beispielsweise auf 10 oder auf mehr als 10, oder auf 20 oder auf mehr als 20) Speichermedien verteilt gespeichert.

Die einzelnen Speichermedien sind vorteilhaft einzeln ansprechbar (etwa zum Schreiben von Daten auf die einzelnen Speichermedien während der Datenaufzeichnung und/oder zum Lesen von Daten von den einzelnen Speichermedien). Die einzelnen Speichermedien können innerhalb einer Speichereinheit vorgesehen sein. Vorzugsweise sind die einzelnen Speichermedien gegen Verlieren gesichert. Beispielsweise können die Speichermedien dazu derart miteinander verbunden sein, dass sich diese nicht zerstörungsfrei voneinander trennen lassen. Die Speichermedien können dazu beispielsweise in Form eines geschlossenen Speicherriegels ausgebildet sein. Die Speichermedien sind vorzugsweise jeweils durch eine Solid State Disk (SSD) realisiert.

Vorzugsweise wird das vorgeschlagene Verfahren ganz oder teilweise auf einem Datenlogger ausgeführt. Der Datenlogger kann beispielsweise Teil eines In-Vehicle-Datenerfassungs- und/oder Prototyping-Systems sein. Das Verfahren kann vorteilhaft auch auf einem verteilten System ausgeführt werden.

Das vorgeschlagene Verfahren ist beispielsweise ganz oder teilweise computerimplementiert.

Vorzugsweise können mit dem vorgeschlagene Verfahren Daten von Sensoren, wie beispielsweise Lidar-, Radar- und/oder Kamerasensoren, und/oder Daten von automotiven Bussen und Netzwerken, insbesondere jeweils mit hoher Bandbreite, eingelesen, verarbeitet und/oder aufgezeichnet werden. Sensordaten können beispielsweise Sensorrohdaten sein. Eine hohe Bandbreite liegt bei empfangenen spezifischen Datenströmen im Sinne dieser Anmeldung beispielsweise bei Datenraten von mehr als 1 Gbit/Sekunde vor. Vorzugsweise weist daher zumindest einer von dem zumindest einen spezifischen Datenstrom eine Datenrate von mehr als 1 Gbit/Sekunde auf.

Zusammenfassend gesprochen ermöglicht das vorgeschlagene Verfahren also eine Speicherung von (spezifischen) Datenströmen selbst hoher Bandbreite auf mehreren Speichermedien. Dadurch kann auch während einer Testfahrt die nötige Bandbreite für eine simultane Aufzeichnung mehrerer Datenströme von unterschiedlichen Sensoren bereitgestellt werden. Daher eignet sich das vorgeschlagene Verfahren besonders vorteilhaft für die datengetriebene Entwicklung von Anwendungen für Fahrerassistenzsysteme und autonomes Fahren. Beispielsweise können die abgespeicherten Daten anschießend dazu genutzt werden, ein neuronales Netz zu trainieren, Fahrassistenzsysteme zu stimulieren, oder sie können als Vorlage für virtuelle Verkehrsszenarien zum Testen eines Fahrassistenzsystem in einer virtuellen Umgebung dienen.

Es sei angemerkt, dass einer oder mehrere der empfangenen Datenströme auch auf andere als die hier beschriebene Weise verarbeitet und/oder gespeichert werden kann bzw. können, wobei es sich dann aber jeweils nicht um einen spezifischen Datenstrom handelt.

Alternativ oder ergänzend kann auch vorgesehen sein, dass die spezifischen Datenströme jeweils kontinuierlich empfangen und in elementare Dateneinheiten aufgeteilt werden.

Durch das kontinuierliche Empfangen und kontinuierliche Aufteilen müssen keine Ressourcen für ein Zwischenspeichern von Daten der spezifischen Datenströme oder nur in geringem Umfang vorgesehen werden. Dies ermöglicht eine besonders wirtschaftliche Realisierung des Verfahrens. Zudem können Latenzen zwischen Empfangen und Speichern der Daten verringert und damit die Datenaufzeichnung effizienter durchgeführt werden.

Alternativ oder ergänzend kann auch vorgesehen sein, dass zwei oder mehr als zwei Datenströme empfangen werden und darunter zwei oder mehr als zwei spezifische Datenströme sind, die insbesondere zumindest teilweise zeitlich parallel empfangen werden.

Dadurch können von mehreren Quellen (insbesondere Sensoren) gleichzeitig Datenströme empfangen und gespeichert werden. Vorzugsweise entspricht die Anzahl der spezifischen Datenströme der Anzahl der empfangenen Datenströme.

Alternativ oder ergänzend kann auch vorgesehen sein, dass die für die einzelnen spezifischen Datenströme vorgegebenen Datenstrom-Beschreibungen jeweils eine oder mehrere technische Spezifikationen des jeweiligen spezifischen Datenstroms aufweisen, basierend auf welchen das Aufteilen des jeweiligen spezifischen Datenstroms in elementare Dateneinheiten zumindest teilweise durchgeführt wird.

Dadurch kann die Aufteilung der einzelnen spezifischen Datenströme in die elementaren Dateneinheiten und/oder die Verarbeitung der Daten unter Berücksichtigung der jeweiligen technischen Spezifikationen des jeweiligen spezifischen Datenstroms durchgeführt werden.

Dadurch kann jeder spezifische Datenstrom individuell behandelt und unter Berücksichtigung dessen jeweiliger Eigenschaften in elementare Dateneinheiten aufgeteilt und die dadurch erhaltenen elementaren Dateneinheiten verarbeitet werden. Auch spezifische Datenströme aus unterschiedlichen Quellen mit zumindest teilweise unterschiedlichen technischen Spezifikationen können auf diese Weise effizient verarbeitet (insbesondere jeweils in elementare Dateneinheiten aufgeteilt) und gespeichert werden.

Die technischen Spezifikationen der spezifischen Datenströme können jeweils ganz oder teilweise vorbekannt sein. Beispielsweise können diese manuell vorgegeben werden. Die technischen Spezifikationen der spezifischen Datenströme können alternativ oder ergänzend auch jeweils ganz oder teilweise automatisiert ermittelt werden. Beispielsweise können diese durch eine Kommunikation mit der jeweiligen Quelle (wie einem Sensor) des spezifischen Datenstroms ermittelt werden. Die automatisierte Ermittlung erfolgt vorteilhaft vor der Datenaufzeichnung und/oder zu Beginn der Datenaufzeichnung. Die Datenstrom-Beschreibungen der einzelnen spezifischen Datenströme können (insbesondere anschließend) zumindest teilweise manuell und/oder zumindest teilweise automatisiert basierend auf den technischen Spezifikationen zumindest teilweise ermittelt werden.

Vorteilhaft kann für zumindest zwei spezifische Datenströme eine identische und/oder gemeinsame Datenstrom-Beschreibung verwendet werden. Dies ist vor allem dann möglich, wenn die jeweiligen spezifischen Datenströme von Quellen baugleichen Typs stammen.

Alternativ oder ergänzend kann auch vorgesehen sein, dass die für die einzelnen spezifischen Datenströme vorgegebenen Datenstrom-Beschreibungen jeweils Informationen zu (i) einer Speichergröße einer elementaren Dateneinheit des jeweiligen spezifischen Datenstroms und/oder (ii) einer Frequenz, mit der die Daten aufeinanderfolgender elementarer Dateneinheiten innerhalb des jeweiligen spezifischen Datenstroms, empfangen werden, aufweisen, basierend auf welchen das Aufteilen des jeweiligen spezifischen Datenstroms in elementare Dateneinheiten zumindest teilweise durchgeführt wird.

Anhand dieser Informationen können die Daten der elementaren Dateneinheiten besonders zuverlässig und effizient verarbeitet werden. Die Speichergröße ist dabei vorteilhaft der Speicherplatzbedarf für die Daten einer elementaren Dateneinheit des jeweiligen spezifischen Datenstroms. Dadurch kann beispielsweise der für ein temporäres Zwischenspeichern der Daten einer solchen elementaren Dateneinheit erforderliche Speicherplatz (etwa zumindest für die Zeitdauer, während der die Daten einer elementaren Dateneinheit empfangen werden und/oder bis die empfangenen Daten einer elementaren Dateneinheit auf einem Speichermedium gespeichert werden) zuverlässig und passgenau reserviert werden. Die Frequenz kann beispielsweise eine Frequenz sein, mit der jeweils das erste Byte von in aufeinanderfolgenden elementaren Datenelementen zu speichernden Daten innerhalb des jeweiligen spezifischen Datenstroms empfangen wird. Wenn eine (insbesondere zumindest zeitweise konstante) Datenrate eines spezifischen Datenstroms bekannt ist, kann vorteilhaft anhand der Speichergröße die Frequenz und/oder vice versa, anhand der Frequenz die Speichergröße, zumindest für einen Zeitabschnitt ermittelt werden.

Außerdem können die für die einzelnen spezifischen Datenströme vorgegebenen Datenstrom-Beschreibungen jeweils Informationen zu Steuerdaten aufweisen, die beispielsweise Trennzeichen definieren, mit denen die Daten aufeinanderfolgender elementarer Dateneinheiten innerhalb des jeweiligen spezifischen Datenstroms voneinander getrennt sind. Anhand dieser Steuerdaten kann beispielsweise die Aufteilung des jeweiligen spezifischen Datenstroms in die elementare Dateneinheiten besonders einfach und zuverlässig durchgeführt werden. Hierauf wird ergänzend weiter unten noch näher eingegangen.

Alternativ oder ergänzend kann auch vorgesehen sein, dass die einzelnen Datenstrom-Beschreibungen aus einem separaten Speicher ausgelesen werden.

Damit ist ein einfacher und zuverlässiger Zugriff auf die Datenstrom-Beschreibungen möglich. Der separate Speicher kann ein entfernter Speicher sein, beispielsweise ein Cloud-Speicher.

Alternativ oder ergänzend kann auch vorgesehen sein, dass das Aufteilen eines spezifischen Datenstroms in elementare Dateneinheiten aufweist, die Daten des jeweiligen spezifischen Datenstroms basierend auf der für den jeweiligen spezifischen Datenstrom vorgegebenen Datenstrom-Beschreibung zu gruppieren und dadurch die elementaren Dateneinheiten zu erhalten.

Beispielsweise kann der jeweilige spezifische Datenstrom auf Vorkommen der in der zugehörigen Datenstrom-Beschreibung definierten Steuerdaten hin analysiert werden und/oder anhand der in dem jeweiligen spezifischen Datenstrom identifizierten Steuerdaten eine Aufteilung des jeweiligen spezifischen Datenstroms in elementare Dateneinheiten durchgeführt werden. Dadurch können anhand der Steuerdaten besonders einfach und dennoch zuverlässig aufeinanderfolgende Datenmengen in dem jeweiligen spezifischen Datenstrom identifiziert und als die einzelnen elementaren Dateneinheiten erhalten werden. Beispielsweise kann der jeweilige spezifische Datenstrom an den Stellen mit den definierten Steuerdaten jeweils aufgeteilt werden. Die Steuerdaten müssen dabei nicht Teil der erhaltenen elementaren Dateneinheiten sein. Die Steuerdaten können beispielsweise Trennzeichen (also Markierungen) definieren, welche wiederum vorteilhaft von der jeweiligen Quelle des spezifischen Datenstroms (insbesondere einem Sensor) in den spezifischen Datenstrom eingefügt werden.

Es ist alternativ oder ergänzend auch möglich, dass die Aufteilung des jeweiligen spezifischen Datenstroms in die elementaren Dateneinheiten anhand der Frequenz und/oder der Speichergröße durchgeführt wird. Optional kann auch die Datenrate des jeweiligen spezifischen Datenstroms herangezogen werden. Beispielsweise kann der jeweilige spezifische Datenstrom überwacht und jeweils nach Verstreichen einer Zeitspanne gemäß der Frequenz bzw. mit Erreichen eines weiteren Datendurchsatzes entsprechend der jeweiligen Speichergröße eine neue elementare Dateneinheit erhalten werden.

Alternativ oder ergänzend kann auch vorgesehen sein, dass eine elementare Dateneinheit eines spezifischen Datenstroms jeweils eine Gruppe von Daten des jeweiligen spezifischen Datenstroms aufweist oder daraus besteht.

Die Gruppe von Daten des jeweiligen spezifischen Datenstroms ist also eine Teilmenge von Daten des jeweiligen spezifischen Datenstroms. Diese Gruppe kann durch die Datenstrom-Beschreibung des jeweiligen spezifischen Datenstroms vorgegeben und/oder ermittelbar sein. Eine elementare Dateneinheit eines spezifischen Datenstroms kann beispielsweise eine Gruppierung von Daten des spezifischen Datenstroms sein, wobei die Gruppierung vorzugsweise basierend auf einer technischen Ausgestaltung des jeweiligen spezifischen Datenstroms gewählt ist, die etwa in der jeweiligen Datenstrom-Beschreibung hinterlegt ist.

Vorzugsweise lässt sich aus den zu den elementaren Dateneinheiten gruppierten Daten eines spezifischen Datenstroms der jeweilige empfangene spezifische Datenstrom vollständig und/oder zumindest teilweise rekonstruieren, insbesondere durch eine Aneinanderreihung der einzelnen elementaren Dateneinheiten. In Ausführungsformen kann es für die vollständige Rekonstruktion des jeweiligen spezifischen Datenstroms notwendig sein, dass zusätzliche, in den elementaren Dateneinheiten nicht enthaltene Daten hinzugefügt werden, beispielsweise die bereits beschriebenen Steuerdaten.

Alternativ oder ergänzend kann auch vorgesehen sein, dass die Daten einer elementaren Dateneinheit eines spezifischen Datenstroms eine zu einem bestimmten Zeitpunkt und/oder während einer bestimmten Zeitspanne von einem Sensor aufgenommene Darstellung von dessen Umgebung repräsentieren.

Dabei kann die "bestimmte Zeitspanne" eine Zeitspanne sein, die benötigt wird, um mittels des Sensors die Daten für die Darstellung der Umgebung aufzunehmen. Beispielsweise kann bei einem Radarsensor die "bestimmte Zeitspanne" eine Zeitspanne sein, die benötigt wird, um mehrere Radarsensorelemente eines Radarsensorarrays des Radarsensors nacheinander anzusteuern. Beispielsweise kann bei einem Lidarsensor die "bestimmte Zeitspanne" eine Zeitspanne sein, die benötigt wird, um mittels eines Lasers des Lidarsensors einen Umgebungsbereich abzurastern und/oder den Laser zumindest einmal um 360° um eine Drehachse zu drehen.

Die Daten einer elementaren Dateneinheit können alternativ oder ergänzend eine zeitlich-räumliche Auflösung von Sensordaten repräsentieren.

Alternativ oder ergänzend kann auch vorgesehen sein, dass eine elementare Dateneinheit eines spezifischen Datenstroms jeweils Daten eines von einem Sensor aufgenommenen Einzelbildes oder eine Zeile oder ein Pixel eines solchen Einzelbildes aufweist.

Dadurch kann eine elementare Dateneinheit vorteilhaft "self-contained" sein, also insbesondere alle Informationen für eine Momentaufnahme der Umgebung des Sensors enthalten.

Insbesondere enthält eine elementare Dateneinheit eines spezifischen Datenstroms jeweils **ausschließlich** Daten eines von einem Sensor aufgenommenen Einzelbildes oder eine Zeile oder ein Pixel eines solchen Einzelbildes.

Alternativ oder ergänzend kann auch vorgesehen sein, dass das verteilte Speichern der elementaren Dateneinheiten der spezifischen Datenströme auf die zumindest zwei Speichermedien basierend auf einer Verteilungs-Vorschrift durchgeführt wird.

Die Verteilungs-Vorschrift kann dabei vorteilhaft basierend auf den Datenstrom-Beschreibungen der spezifischen Datenströme ermittelt werden. Dadurch können die vorbekannten Eigenschaften der spezifischen Datenströme zumindest implizit für eine Verteilung der elementaren Dateneinheiten auf die einzelnen Speichermedien eingesetzt werden. Denn, wie oben bereits beschrieben wurde, die nach definiertem Schema erhaltenen elementaren Dateneinheiten führen vorteilhaft zu einer a priori jedenfalls im Prinzip vorbekannten Datenmenge pro Zeiteinheit und/oder mit a priori jedenfalls im Prinzip vorbekannten Eigenschaften.

Dadurch können zumindest teilweise basierend auf und/oder ausgehend von der Verteilungs-Vorschrift Ressourcen für die Speicherung der Daten der spezifischen Datenströme im Voraus koordiniert werden. Beispielsweise können für die erwarteten verteilt zu speichernden elementaren Dateneinheiten Speicherbereiche auf den einzelnen Speichermedien und/oder Bandbreiten für den Schreibzugriff auf die einzelnen Speichermedien geplant, passend dimensioniert und/oder zugeteilt werden.

Besonders vorteilhaft ist es, wenn die Verteilungs-Vorschrift basierend auf einem Ergebnis eines Algorithmus zur Lösung eines "Behälterproblems" ermittelt wird. Da vorteilhaft die pro Zeiteinheit anfallenden elementaren Dateneinheiten der spezifischen Datenströme bereits im Voraus bekannt sind, kann deren Verteilung auf die Speichermedien mittels eines solchen Algorithmus a priori geplant werden. Solche Algorithmen sind dem Fachmann an und für sich wohlbekannt, so dass hierauf an dieser Stelle nicht näher eingegangen werden muss. Stattdessen kann auf die einschlägige Literatur verwiesen werden.

Die Verteilungs-Vorschrift kann dabei ganz oder teilweise automatisiert ermittelt werden, beispielsweise basierend auf den Datenstrom-Beschreibungen und/oder unter Einbeziehung eines Algorithmus zur Lösung eines "Behälterproblems". Die automatisierte Ermittlung erfolgt vorteilhaft vor der Datenaufzeichnung und/oder zu Beginn der Datenaufzeichnung.

Das verteilte Speichern der elementaren Dateneinheiten der spezifischen Datenströme kann dadurch zumindest teilweise auf Basis von in Bezug auf die spezifischen Datenströme a priori bekannten Informationen sowie davon abgeleitete Informationen durchgeführt werden. Dadurch kann ein herkömmlicher Weise eingesetzter Raid-Controller vorteilhaft entfallen.

Alternativ oder ergänzend kann auch vorgesehen sein, dass anhand der Verteilungs-Vorschrift jeder elementaren Dateneinheit der spezifischen Datenströme jeweils zumindest eines, vorzugsweise genau eines, der zumindest zwei Speichermedien als Speicherort zugewiesen wird, und vorzugsweise die einzelnen elementaren Dateneinheiten auf dem diesen jeweils zugewiesenen Speichermedium gespeichert werden.

Dadurch kann die Verteilung der einzelnen elementaren Dateneinheiten der spezifischen Datenströme vorzugsweise nach einem festen und/oder im Voraus bekannten Schema durchgeführt werden. Dadurch ist der Speichervorgang besonders effizient, da keine weitere (insbesondere inhaltliche) Analyse der zu speichernden Daten notwendig ist. Dieser Zeitvorteil ist gerade im Hinblick auf eine Echtzeitverarbeitung besonders interessant.

Durch die Verteilungs-Vorschrift kann auch der zeitlich parallele Schreibzugriff auf die zumindest zwei Speichermedien zumindest implizit vorgegeben sein.

Alternativ oder ergänzend kann auch vorgesehen sein, dass die elementaren Dateneinheiten zumindest einer, vorzugsweise alle, der zumindest einen spezifischen Datenströme auf mehreren der zumindest zwei Speichermedien verteilt gespeichert werden, insbesondere nach Maßgabe der Verteilungs-Vorschrift. Dadurch kann besonders gut die verfügbare Eingangs-Bandbreite maximiert werden.

Alternativ oder ergänzend kann auch vorgesehen sein, dass durch die Verteilungs-Vorschrift für zumindest einen, vorzugsweise für jeden, spezifischen Datenstrom eine, insbesondere zyklische, Reihenfolge von Speichermedien vorgegeben wird, gemäß der die elementaren Dateneinheiten des jeweiligen spezifischen Datenstroms der Reihe nach auf den Speichermedien gespeichert werden.

Die Reihenfolge von Speichermedien gilt hierbei also jeweils bezogen auf die elementaren Dateneinheiten des einzelnen betreffenden spezifischen Datenstroms.

Die vorgegebene Reihenfolge von Speichermedien ist dabei vorteilhaft für jeden der betreffenden spezifischen Datenströme identisch. In Ausführungsformen können die Reihenfolgen auch teilweise verschieden sein, insbesondere zumindest teilweise eine verschiedene Auswahl von Speichermedien und/oder Reihenfolge von Speichermedien betreffen.

Dadurch kann für die betreffenden spezifischen Datenströme jeweils eine (optional identische) definierte Verteilung derer elementaren Dateneinheiten auf die zumindest zwei Speichermedien erreicht werden.

Beispielsweise könnten bei drei vorhandenen Speichermedien (S1-S3) für jeden der betreffenden spezifischen Datenströme dessen elementare Dateneinheiten der Reihe nach auf S1, S2, S3 und wieder von vorne, also der Reihe nach auf S1, S2, S3, usw. gespeichert werden. Wenn hierbei exemplarisch der Fall betrachtet wird, dass nur ein einziger spezifischer Datenstrom empfangen wird, so könnten immer drei elementare Dateneinheiten des einzigen spezifischen Datenstroms zeitlich parallel auf die drei Speichermedien S1, S2, S3 gespeichert werden. Dies veranschaulicht nochmals die Möglichkeit, die Eingangsbandbreite zu erhöhen, indem weitere Speichermedien vorgesehen werden.

Alternativ oder ergänzend kann auch vorgesehen sein, dass durch die Verteilungs-Vorschrift eine, insbesondere zyklische, Reihenfolge von Speichermedien vorgegeben wird, gemäß der die elementaren Dateneinheiten der spezifischen Datenströme der Reihe nach auf den Speichermedien gespeichert werden.

Die Reihenfolge von Speichermedien gilt hierbei also bezogen auf die elementaren Dateneinheiten aller betreffenden spezifischen Datenströme.

Dadurch können für die betreffenden spezifischen Datenströme jeweils eine Verteilung derer elementaren Dateneinheiten auf die zumindest zwei Speichermedien erreicht werden.

Beispielsweise könnten bei drei vorhandenen Speichermedien (S1-S3) und bei zwei spezifischen Datenströmen mit den elementaren Dateneinheiten D1.1, D1.2, D1.3, ... des ersten spezifischen Datenstroms und den elementaren Dateneinheiten D2.1, D2.2, D2.3, ... des zweiten spezifischen Datenstroms die zeitlich aufeinanderfolgenden elementaren Dateneinheiten D1.1, D2.1, D1.2, D2.2, D1.3, D2.3, ... der Reihe nach auf S1, S3, S5 und wieder von vorne, also der Reihe nach auf S1, S2, S3, usw. gespeichert werden. Auch wenn hier zu Illustrationszwecken immer im Wechsel eine elementare Dateneinheit des ersten spezifischen Datenstroms mit einer elementaren Dateneinheit des zweiten spezifischen Datenstroms auftritt, können in Ausführungsformen die elementaren Dateneinheiten der einzelnen Datenströme auch in anderer Reihenfolge/Frequenz auftreten (beispielsweise D1.1, D1.2, D2.1, D1.3, D1.4, D2.2, usw...), abhängig davon, wann jeweils die Daten der einzelnen elementaren Dateneinheiten empfangen werden.

Alternativ oder ergänzend kann auch vorgesehen sein, dass die Verteilungs-Vorschrift vor Beginn der Datenaufzeichnung ermittelt wird.

Dadurch kann das verteilte Speichern anhand a priori klar definierter Regeln erfolgen. Die Verteilungs-Vorschrift kann besonders einfach anhand der Datenstrom-Beschreibungen der einzelnen spezifischen Datenströme ermittelt werden.

Alternativ oder ergänzend kann auch vorgesehen sein, dass die Verteilungs-Vorschrift derart ermittelt wird, dass bei dem verteilten Speichern der elementaren Dateneinheiten der spezifischen Datenströme auf die zumindest zwei Speichermedien eine für den Schreibzugriff auf die einzelnen Speichermedien jeweils zulässige maximale Datenrate jeweils nicht überschritten wird.

Dadurch kann eine besonders effiziente Speicherung der elementaren Dateneinheiten ermöglicht werden.

Alternativ oder ergänzend kann auch vorgesehen sein, dass die Verteilungs-Vorschrift derart ermittelt wird, dass bei dem verteilten Speichern der elementaren Dateneinheiten der spezifischen Datenströme auf die zumindest zwei Speichermedien eine gleichmäßige Befüllung der einzelnen Speichermedien mit Daten erreicht wird.

Auf diese Weise kann vermieden werden, dass sich die zulässige Eingangsbandbreite verringert, sobald eines der Speichermedien voll ist. Zudem kann auf diese Weise der zur Verfügung stehende Speicherplatz besonders effizient genutzt werden. Dadurch kann eine besonders effiziente Speicherung der elementaren Dateneinheiten ermöglicht werden. Ein Speichermedium wird "mit Daten befüllt", indem Daten auf dem Speichermedium gespeichert werden. Eine solche gleichmäßige Befüllung kann besonders vorteilhaft durch den Einsatz eines bereits oben beschriebenen Algorithmus zur Lösung eines "Behälterproblems" erreicht werden.

Alternativ oder ergänzend kann auch vorgesehen sein, dass für jedes der zumindest zwei Speichermedien jeweils eine maximale Datenrate, mit der das jeweilige Speichermedium beschreibbar ist, als Bandbreiteninformation und/oder ein freier Speicherplatz als Kapazitätsinformation vorbekannt ist oder sind und/oder automatisiert ermittelt wird oder werden, und wobei vorzugsweise die Verteilungs-Vorschrift basierend auf den Bandbreiteninformationen und/oder Kapazitätsinformationen der Speichermedien ermittelt wird.

Dadurch kann eine besonders effiziente Befüllung der Speichermedien mit den elementaren Dateneinheiten erfolgen.

Vorzugsweise weist die automatisierte Ermittlung der Bandbreiteninformation und/oder der Kapazitätsinformation auf, dass die entsprechenden Informationen von den einzelnen Speichermedien abgefragt werden.

Alternativ oder ergänzend kann auch vorgesehen sein, dass die Verteilungs-Vorschrift basierend auf den für die spezifischen Datenströme vorgegebenen Datenstrom-Beschreibungen und/oder diesen Datenstrom-Beschreibungen zugrunde liegenden Informationen, insbesondere (i) Speichergrößen der elementaren Dateneinheiten der jeweiligen spezifischen Datenströme und/oder (ii) Frequenzen, mit denen die Daten aufeinanderfolgender elementarer Dateneinheiten innerhalb der jeweiligen spezifischen Datenströme empfangen werden, ermittelt wird.

Dies ermöglicht besonders vorteilhaft die technischen Eigenschaften der spezifischen Datenströme bei der Verteilung einzubeziehen.

Besonders vorteilhaft ist es, wenn die Verteilungs-Vorschrift basierend auf den für die spezifischen Datenströme vorgegebenen Datenstrom-Beschreibungen und/oder diesen Datenstrom-Beschreibungen zugrunde liegenden Informationen, und basierend auf der Bandbreiteninformation und/oder der Kapazitätsinformation ermittelt wird. Dadurch können besonders vorteilhaft die technischen Eigenschaften sowohl der spezifischen Datenströme (Quellen) als auch der Speichermedien (Ziele) bei der Verteilung einbezogen werden.

Alternativ oder ergänzend kann auch vorgesehen sein, dass die identische Verteilungs-Vorschrift für die gesamte Dauer der Datenaufzeichnung angewendet wird.

Dadurch kann der Speichervorgang besonders effizient durchgeführt werden.

Alternativ oder ergänzend kann auch vorgesehen sein, dass die spezifischen Datenströme (i) jeweils, insbesondere ausschließlich, Daten einer anwendungsbezogenen Schicht enthalten und/oder (ii) jeweils keine Protokoll- und/oder Transportinformationen enthalten.

Die anwendungsbezogene Schicht ist beispielsweise eine der Schichten 5-7 im OSI-Modell.

Die spezifischen Datenströme enthalten also vorteilhaft keine Informationen, die für die Übertragung derer Daten über einen Übertragungskanal notwendig sind (wie beispielsweise Adressinformationen der jeweiligen Quelle oder des jeweiligen Ziels der Daten).

Vorzugsweise werden Informationen, die der Zuordnung von Daten eines spezifischen Datenstroms zu einer elementaren Dateneinheit dienen (wie beispielsweise die oben beschriebenen Steuerdaten), als Daten einer anwendungsbezogenen Schicht und/oder nicht als Protokoll- und/oder Transportinformationen verstanden.

Alternativ oder ergänzend kann auch vorgesehen sein, dass die spezifischen Datenströme jeweils Sensorsignale repräsentieren, die insbesondere von bildgebenden Sensoren und/oder von unterschiedlichen Sensoren stammen.

Beispielsweise ist zumindest ein Sensor ausgewählt aus der Gruppe von Sensoren aufweisend: Kamerasensor, Radarsensor, Lidarsensor und/oder Ultraschallsensor.

Die Sensorsignale können beispielsweise Sensordaten, insbesondere Sensorrohdaten, sein.

Die spezifischen Datenströme können also beispielsweise Bilddaten von bildgebenden Sensoren aufweisen. Dazu können die Sensoren jeweils beispielsweise einen stetigen und gleichmäßigen Strom an Bildframes liefern, der jeweils als spezifischer Datenstrom empfangen wird.

Alternativ oder ergänzend kann auch vorgesehen sein, dass zumindest ein spezifischer Datenstrom Sensorsignale eines Kamerasensors, Radarsensors, Lidarsensors und/oder Ultraschallsensors repräsentiert.

Die Sensoren können dabei zeitabhängige Signale liefern.

Alternativ oder ergänzend kann auch vorgesehen sein, dass zumindest ein Sensor zeitlich nacheinander in unterschiedlichen Betriebsmodi betrieben wird, und sich in Abhängigkeit des Betriebsmodus zumindest eine technische Spezifikation des von dem Sensor empfangenen spezifischen Datenstroms, wie (i) eine Datenrate, (ii) eine Datengröße einer elementaren Dateneinheit und/oder (iii) eine Frequenz, mit der neue elementare Dateneinheiten empfangen werden, ändert.

Beispielsweise kann der Sensor zunächst in einem ersten Betriebsmodus betrieben werden und zeitlich danach in einem zweiten Betriebsmodus betrieben werden. Beispielsweise kann die Auflösung der von dem Sensor aufgenommenen Bilder und damit die Datenrate des von dem Sensor empfangenen spezifischen Datenstroms in den beiden Betriebsmodi verschieden sein, insbesondere in dem zweiten Betriebsmodus höher als in dem ersten Betriebsmodus.

Zum Beispiel kann ein automotiver Kamerasensor bei Vorliegen einer kritischen Verkehrssituation die Bildrate oder die Auflösung erhöhen und dadurch zwischen den unterschiedlichen Betriebsmodi wechseln.

In Ausführungsformen können die Zeitintervalle, innerhalb derer sich der Betriebsmodus nicht ändert, als getrennte Aufnahmen gespeichert werden, mit jeweils eigenen Start- und Endzeiten und eigenen IDs. Anhand einer übergeordneten Aufnahme-ID kann dann gekennzeichnet sein, dass die einzelnen Intervalle zusammengehören. Dadurch können diese beispielsweise bei einer Rekonstruktion zu einer einzigen, durchgehenden Aufnahme zusammengefügt werden.

Alternativ oder ergänzend kann auch vorgesehen sein, dass die Verteilungs-Vorschrift derart ermittelt wird, dass in jedem Betriebsmodus des Sensors die elementaren Dateneinheiten auf die zumindest zwei Speichermedien verteilt gespeichert werden.

Die Verteilungs-Vorschrift wird dabei also vorteilhaft derart ermittelt, dass eine verteilte Speicherung der elementaren Dateneinheiten unabhängig der zeitabhängigen Wahl der Betriebsmodi gewährleistet ist.

Alternativ oder ergänzend kann auch vorgesehen sein, dass die Datenstrom-Beschreibung des von dem Sensor empfangenen spezifischen Datenstroms und/oder die Verteilungs-Vorschrift jeweils zumindest teilweise für denjenigen Betriebsmodus ermittelt wird, bei dem der von dem Sensor empfangene spezifische Datenstrom die größte Datenrate aufweist.

Dadurch ist sozusagen die Datenaufzeichnung auf das "worst case"-Szenario ausgerichtet und auch in diesem Fall noch möglich. Beispielsweise kann der für die Zwischenspeicherung reservierte Speicherplatz bei Auslegung auf das "worst case"-Szenario während eines Zeitraums, in dem die Datenrate geringer als die größte Datenrate ist, zu groß dimensioniert sein. Gleichermaßen kann die für das Speichern der elementaren Dateneinheiten des spezifischen Datenstroms reservierte Bandbreite des Schreibzugriffs, während eines Zeitraums, in dem die Datenrate geringer als die größte Datenrate ist, zu groß dimensioniert sein. Gleichermaßen kann der für das Speichern der elementaren Dateneinheiten des spezifischen Datenstroms reservierte Speicherplatz auf einem der Speichermedien, während eines Zeitraums, in dem die Datenrate geringer als die größte Datenrate ist, zu groß dimensioniert sein. Dies wird jedoch in diesen Fällen in Kauf genommen, um während eines Zeitraums, in dem die Datenrate der größten Datenrate entspricht, weiterhin zuverlässig eine Verarbeitung der empfangenen Daten und eine verteilte Speicherung der elementaren Dateneinheiten durchführen zu können.

Alternativ oder ergänzend kann auch vorgesehen sein, dass in Abhängigkeit des ausgewählten Betriebsmodus des Sensors zwischen unterschiedlichen Datenstrom-Beschreibungen des von dem Sensor empfangenen spezifischen Datenstroms und/oder Verteilungs-Vorschriften gewechselt wird.

Dadurch kann auf veränderte Rahmenbedingungen flexibel Rücksicht genommen werden. Dies ermöglicht einen besonders effizienten Umgang mit den Ressourcen, insbesondere den Speichermedien.

Alternativ oder ergänzend kann auch vorgesehen sein, dass für zumindest einen von einem Sensor stammenden spezifischen Datenstrom zumindest eine der technischen Spezifikationen des jeweiligen spezifischen Datenstroms automatisiert durch eine Kommunikation mit dem Sensor ermittelt und in der Datenstrom-Beschreibung verwendet wird.

Dadurch können beispielsweise die oben genannten Informationen der Datenstrom-Beschreibung automatisiert ermittelt und bei der Ermittlung der Datenstrom-Beschreibung eingesetzt werden. Ergänzend kann auf die vorherigen Ausführungen verwiesen werden.

Alternativ oder ergänzend kann auch vorgesehen sein, dass die elementaren Dateneinheiten zumindest eines spezifischen Datenstroms, vorzugsweise aller spezifischen Datenströme, jeweils auf zumindest zwei der zumindest zwei Speichermedien verteilt gespeichert werden.

Dadurch kann besonders vorteilhaft eine zulässige Bandbreite der empfangenen spezifischen Datenströme maximiert werden.

Alternativ oder ergänzend kann auch vorgesehen sein, dass die elementaren Dateneinheiten zumindest eines spezifischen Datenstroms, vorzugsweise aller spezifischen Datenströme, jeweils redundanzfrei auf zumindest zwei der zumindest zwei Speichermedien verteilt gespeichert werden.

Dies ermöglich es, den Speichervorgang besonders effizient durchzuführen.

Alternativ oder ergänzend kann auch vorgesehen sein, dass eine Datenrate zumindest eines Datenstroms des zumindest einen spezifischen Datenstroms, insbesondere aller parallel empfangenen spezifischer Datenströme, einen Maximalwert aufweist, der größer ist als eine maximal zulässige Datenrate, mit der zumindest eines, vorzugsweise alle, der zumindest zwei Speichermedien beschrieben werden kann.

Durch das (zeitlich parallel durchgeführte) verteilte Speichern der elementaren Dateneinheiten auf den zumindest zwei Speichermedien kann die Gesamtbandbreite der empfangenen spezifischen Datenströme größer sein als die maximal zulässige Bandbreite bei Schreibzugriff auf ein einzelnes der Speichermedien, wie dies oben bereite beschrieben wurde.

Beispielsweise kann jedes der Speichermedien jeweils mit einer Datenrate von maximal 1 Mbit/Sekunde beschreibbar sein. Wenn ein einziger spezifischer Datenstrom zur Datenaufzeichnung empfangen wird, kann dieser aufgrund des parallelen verteilten Speicherns theoretisch eine Bandbreite von 2 Mbit/Sekunde aufweisen.

Das Verfahren erlaubt damit vorteilhaft eine Erhöhung der Eingangsbandbreite, indem ein oder mehrere eintreffende spezifische Datenströme, vorzugsweise in Echtzeit, auf mehrere Speichermedien zeitlich parallel verteilt gespeichert werden.

Unter der Datenrate aller parallel empfangenen spezifischer Datenströme wird hierbei vorzugsweise die Summe der Datenraten der einzelnen spezifischen Datenströme verstanden.

Alternativ oder ergänzend kann auch vorgesehen sein, dass die Datenaufzeichnung in Echtzeit durchgeführt wird und/oder keine Zwischenspeicherung der Daten der empfangenen spezifischen Datenströme in einem nicht-flüchtigen Speicher aufweist.

Ohne eine Zwischenspeicherung in einem nicht-flüchtigen Speicher kann die Datenverarbeitung (etwa das Gruppieren von Daten innerhalb eines spezifischen Datenstroms zu den elementaren Dateneinheiten des spezifischen Datenstroms) besonders schnell ausgeführt werden. Beispielsweise kann eine Zwischenspeicherung in einem Arbeitsspeicher (RAM) erfolgen.

Alternativ oder ergänzend kann auch vorgesehen sein, dass die Datenaufzeichnung aufweist, dass Metadaten, die Informationen zu den auf den einzelnen Speichermedien gespeicherten elementaren Dateneinheiten, insbesondere zur Wiederherstellung der einzelnen spezifischen Datenströme aus den über die zumindest zwei Speichermedien verteilt gespeicherten elementaren Dateneinheiten, aufweisen, erzeugt werden.

Die Metadaten können vorteilhaft dazu dienen, die auf den einzelnen Speichermedien gespeicherten elementaren Dateneinheiten auf den Speichermedien identifizieren, von dem jeweiligen Speichermedium abrufen, einem spezifischen Datenstrom zuordnen und/oder in einer richtigen Reihenfolge zur Rekonstruktion des ursprünglichen spezifischen Datenstroms aneinanderreihen zu können.

Die Metadaten sind vorteilhaft mit der eingesetzten Verteilungs-Vorschrift assoziiert. Die Metadaten und die eingesetzte Verteilungs-Vorschrift können sich daher ergänzen und eine gemeinsame Informationsbasis bereitstellen. Vorzugsweise kann anhand dieser Informationsbasis eine Wiederherstellung eines spezifischen Datenstroms zumindest teilweise (vorzugsweise vollständig) möglich sein.

Alternativ oder ergänzend kann auch vorgesehen sein, dass die Metadaten eine Auswahl folgender Informationen enthalten:
- Informationen zur Datenaufzeichnung, wie eine eindeutige Kennung der Datenaufzeichnung und/der eine eindeutige Kennung des für die Datenaufzeichnung eingesetzten Systems;
- Speicheradressbereiche der einzelnen elementaren Dateneinheiten, insbesondere jeweils Zeiger auf das erste und letzte Byte der jeweiligen elementaren Dateneinheiten;
- eindeutige Kennungen zur Identifizierung einzelner elementarer Dateneinheiten;
- Zuordnungen der einzelnen elementaren Dateneinheiten zu Quellen, insbesondere Sensoren;
- Informationen zur zeitlichen Sortierung der elementaren Dateneinheiten, etwa in Form von Zeitstempeln, eine oder mehrere Listen der eindeutigen Kennungen in einer chronologischen Reihenfolge;
- eine eindeutige Kennung der Datenaufzeichnungssession;
- eindeutige Kennungen der an der Datenaufzeichnung beteiligten Speichermedien;
- eindeutige Kennungen von an den Speichermedien angeordneten Tags;
- eine Liste mit Quellen, von denen die spezifischen Datenströme stammen;
- eine Liste mit den an der Datenaufzeichnung beteiligten Speichermedien, insbesondere zur Überprüfung, ob die aufgenommenen Daten vollständig vorliegen;
- Name und Pfad einer Zieldatei, in der Daten rekonstruierter Datenströme hinterlegt werden sollen; und/oder
- Start- und Endzeitpunkt der Datenaufzeichnung.

Die Tags können beispielsweise RFID-Tags sein. Dadurch kann die Anwesenheit der Speichermedien funkbasiert erfasst werden. Die einzelnen Speichermedien können zu diesem Zweck mit jeweils einem solchen Tag ausgestattet sein. Jeder Tag kann eine eindeutige Kennung des jeweiligen Speichermediums enthalten, die durch Auslesen des Tags, insbesondere funkbasiert, erhalten werden kann.

Vorzugsweise weisen die Metadaten Informationen zu den während der Datenaufzeichnung vorliegenden Betriebsmodi eines oder mehrerer Sensoren auf. Dadurch ist bekannt, wann welche Datenstrom-Beschreibungen und/oder Verteilungs-Vorschriften angewendet wurden. Alternativ oder ergänzend können die Metadaten Informationen zu den während der Datenaufzeichnung zeitabhängig angewendeten Datenstrom-Beschreibungen und/oder Verteilungs-Vorschriften aufweisen.

Alternativ oder ergänzend kann auch vorgesehen sein, dass die Metadaten jeweils vollständig auf zumindest einem, vorzugsweise auf allen, der zumindest zwei Speichermedien und/oder in einem separaten Speicher gespeichert werden.

Wenn die Metadaten zusammen mit den übrigen elementaren Dateneinheiten auf einem oder mehreren Speichermedien hinterlegt sind, ist eine zuverlässige Rekonstruktion der Daten möglich.

Der separate Speicher kann ein entfernter Speicher sein, beispielsweise ein Cloud-Speicher.

Alternativ oder ergänzend kann auch vorgesehen sein, dass auf jedem Speichermedium nur zu denjenigen elementaren Dateneinheiten Metadaten gespeichert werden, welche elementaren Dateneinheiten auf dem jeweiligen Speichermedium gespeichert sind.

Für eine Rekonstruktion der Daten können dann zunächst von allen beteiligten Speichermedien die Metadaten abgerufen und ausgewertet werden. Anhand der zusammengetragenen Metadaten kann anschließend die Rekonstruktion vorteilhaft durchgeführt werden.

Alternativ oder ergänzend kann auch vorgesehen sein, dass auf jedem Speichermedium zu allen elementaren Dateneinheiten Metadaten gespeichert werden.

Vorteilhaft kann somit erkannt werden, welche Speichermedien für eine Rekonstruktion erforderlich sind. Dadurch können für eine Rekonstruktion noch fehlende Speichermedien schnell festgestellt werden.

Die Aufgabe wird durch die Erfindung gemäß einem **zweiten Aspekt** gelöst durch ein Verfahren zur Erzeugung zumindest eines Datenstroms, insbesondere mit einem Verfahren gemäß dem ersten Aspekt der Erfindung, aus über zumindest zwei Speichermedien oder Quelldateien verteilt gespeicherten elementaren Dateneinheiten, wobei anhand von Metadaten zumindest zwei elementare Dateneinheiten von unterschiedlichen Speichermedien oder aus unterschiedlichen Quelldateien abgerufen und in eine zeitliche Reihenfolge gebracht werden, und dadurch der zumindest eine Datenstrom zumindest teilweise erzeugt wird.

Dadurch kann vorteilhaft ein Datenstrom aus den fragmental über mehrere Speichermedien oder Quelldateien verteilt gespeicherten Daten rekonstruiert werden. Durch das Zusammenspiel zwischen den gespeicherten Metadaten und den gespeicherten elementaren Dateneinheiten ist dabei vorteilhaft kein zusätzliches Vorwissen über die ursprünglichen Datenströme oder zu sonstigen Umständen während der Datenaufzeichnung notwendig. Dies macht eine Rekonstruktion besonders zuverlässig möglich.

Durch die Möglichkeit, den Datenstrom auch aus Quelldateien zu erzeugen, ist eine Unabhängigkeit von Speichermedien vorteilhaft gegeben. Daher können beispielsweise die im Rahmen einer Datenaufzeichnung mit einem Verfahren gemäß dem ersten Aspekt der Erfindung auf den zumindest zwei Speichermedien gespeicherten Daten in Form von Dateien (insbesondere jeder Inhalt eines Speichermediums als eine eigene Datei) zu einem entfernten Rechner übertragen (beispielsweise auf einen Cloud-Rechner) und dort der Datenstrom aus den übertragenen Quelldateien wie beschrieben erzeugt werden. Anschließend kann der erzeugte Datenstrom optional zurück übertragen werden. In Ausführungsformen können die Quelldateien von verschiedenen Entitäten aus auf den entfernten Rechner übertragen werden und/oder das Erzeugen des Datenstroms erst dann begonnen werden, wenn alle notwendigen Quelldateien vorhanden sind. Auf das Vorliegen aller Quelldateien kann beispielsweise wie auf das Vorliegen aller Speichermedien mit Hilfe der in den Metadaten hinterlegten Informationen geprüft werden, worauf weiter unten noch näher eingegangen wird.

Der erzeugte Datenstrom kann dabei ein Datenstrom mit den Daten eines Sensors (wie ein Radar-, Lidar- oder Kamerasensor) sein. Beispielswiese kann der Datenstrom ein zuvor empfangener Datenstrom (etwa ein in einem Verfahren gemäß dem ersten Aspekt der Erfindung empfangener spezifischer Datenstrom) sein.

Vorteilhaft können alle Merkmale, die in Bezug auf das Verfahren gemäß dem ersten Aspekt der Erfindung beschrieben worden sind in entsprechender, insbesondere spiegelbildlicher, Weise auch bei dem Verfahren gemäß dem zweiten Aspekt der Erfindung vorgesehen sein, soweit sich aus dem Zusammenhang nichts anderes ergibt.

Alternativ oder ergänzend kann auch vorgesehen sein, dass die Daten des erzeugten Datenstroms über ein Netzwerk übertragen und/oder in einem separaten Speicher abgelegt werden.

Der separate Speicher kann ein entfernter Speicher sein, beispielsweise ein Cloud-Speicher.

Alternativ oder ergänzend kann auch vorgesehen sein, dass anhand der Metadaten zumindest zwei Datenströme aus jeweils zumindest zwei elementaren Dateneinheiten zumindest teilweise erzeugt werden, wobei vorzugsweise jeder der erzeugten Datenströme in einer eigenen Zieldatei gespeichert wird oder zumindest zwei der erzeugten Datenströme in einer gemeinsamen Datei gespeichert werden.

Erzeugte Datenströme können besonders vorteilhaft in der jeweiligen Datei gespeichert werden, indem deren Daten in der Datei gespeichert werden.

Alternativ oder ergänzend kann auch vorgesehen sein, dass die Metadaten von zumindest einem Speichermedium oder aus zumindest einer Quelldatei abgerufen werden, von dem oder aus der auch zumindest eine der elementaren Dateneinheiten abgerufen wird.

Alternativ oder ergänzend kann auch vorgesehen sein, dass anhand der Metadaten geprüft wird, ob alle der zumindest zwei Speichermedien oder alle der zumindest zwei Quelldateien, insbesondere für das Abrufen der auf oder in diesen gespeicherten elementaren Dateneinheiten, verfügbar sind.

Beispielsweise können dazu in den Metadaten Informationen zu an den einzelnen Speichermedien vorgesehenen Tags enthalten sein. Dann kann auf die Anwesenheit der einzelnen Tags und damit auf die Anwesenheit der einzelnen Speichermedien geprüft werden. Gleichermaßen kann in den Quelldateien jeweils eine eindeutige Kennung enthalten sein, so dass mit Hilfe der Metadaten, die die Kennungen aller Quelldateien enthält, auf das Vorliegen aller Quelldateien geprüft werden kann. Im Fall, dass zumindest ein Speichermedium oder zumindest eine Quelldatei dabei nicht als anwesend erkannt wird, kann ein Fehlersignal erzeugt werden und optional das Erzeugen des Datenstroms abgebrochen werden.

Die Aufgabe wird durch die Erfindung gemäß einem **dritten Aspekt** gelöst durch eine Vorrichtung zur Datenverarbeitung, insbesondere zur Datenaufzeichnung, die mit einem oder mehreren Sensoren datentechnisch gekoppelt oder koppelbar ist und/oder die mit zumindest zwei Speichermedien datentechnisch gekoppelt oder koppelbar ist, die Vorrichtung aufweisend Mittel, die dazu eingerichtet sind, ein Verfahren gemäß dem ersten Aspekt der Erfindung auszuführen.

Alle Vorteile, die in Bezug auf das Verfahren gemäß dem ersten Aspekt der Erfindung beschrieben wurden, gelten dabei entsprechend auch für die Vorrichtung. Daher kann insoweit an dieser Stelle auf die vorherigen Ausführungen verwiesen werden.

Die Merkmale, die in Bezug auf das Verfahren gemäß dem ersten Aspekt der Erfindung beschrieben wurden, können dabei auch bei der Vorrichtung oder im Zusammenhang mit der Vorrichtung entsprechend vorgesehen sein, einzeln und in beliebiger Kombination, sofern sich aus dem Zusammenhang nichts anderes ergibt. Insbesondere kann die Vorrichtung dazu eingerichtet sein, die in Bezug auf das Verfahren gemäß dem ersten Aspekt der Erfindung beschrieben Verfahrensschritte, insbesondere einzeln und in beliebiger Kombination, auszuführen.

Vorzugsweise weist die Vorrichtung eine oder mehrere Schnittstellen auf, über die die datentechnische Kopplung mit dem Sensor oder den Sensoren hergestellt oder herstellbar ist. Vorzugsweise weist die Vorrichtung eine oder mehrere Schnittstellen auf, über die die datentechnische Kopplung mit den Speichermedien hergestellt oder herstellbar ist.

Die Vorrichtung kann alternativ oder ergänzend einen Speicher, einen Prozessor, eine Empfangseinrichtung, eine Sendeeinrichtung oder eine beliebige Kombination davon aufweisen. Die Vorrichtung kann alternativ oder ergänzend alles, was von dieser aufgewiesen ist, wie insbesondere alle notwendigen Ressourcen, beispielsweise in Form von Software- und/oder Hardwareressourcen, bereitstellen und/oder verfügbar machen und/oder aufweisen. Die Vorrichtung kann vorteilhaft Mittel zum Empfangen, Senden, Speichern, Verarbeiten, Auswerten und/oder Analysieren der Daten der jeweiligen spezifischen Datenströme aufweisen.

Die Vorrichtung kann als ein Datenlogger ausgebildet sein. Die Vorrichtung kann alternativ oder ergänzend ein verteiltes System darstellen.

Die Aufgabe wird durch die Erfindung gemäß einem **vierten Aspekt** dadurch gelöst, dass eine Vorrichtung zur Datenverarbeitung, insbesondere zur Rekonstruktion eines, insbesondere mit einer Vorrichtung gemäß dem dritten Aspekt der Erfindung aufgezeichneten, Datenstroms, die mit zumindest zwei Speichermedien datentechnisch gekoppelt oder koppelbar ist, die Vorrichtung aufweisend Mittel, die dazu eingerichtet sind, ein Verfahren gemäß dem zweiten Aspekt der Erfindung auszuführen, vorgeschlagen wird.

Alle Vorteile, die in Bezug auf das Verfahren gemäß dem zweiten Aspekt der Erfindung beschrieben wurden, gelten dabei entsprechend auch für die Vorrichtung gemäß dem vierten Aspekt der Erfindung. Daher kann insoweit an dieser Stelle auf die vorherigen Ausführungen verwiesen werden.

Die Merkmale, die in Bezug auf das Verfahren gemäß dem zweiten Aspekt der Erfindung beschrieben wurden, können dabei auch bei der Vorrichtung oder im Zusammenhang mit der Vorrichtung entsprechend vorgesehen sein, einzeln und in beliebiger Kombination, sofern sich aus dem Zusammenhang nichts anderes ergibt. Insbesondere kann die Vorrichtung dazu eingerichtet sein, die in Bezug auf das Verfahren gemäß dem zweiten Aspekt der Erfindung beschrieben Verfahrensschritte, insbesondere einzeln und in beliebiger Kombination, auszuführen.

Vorzugsweise weist die Vorrichtung eine oder mehrere Schnittstellen auf, über die die datentechnische Kopplung mit den Speichermedien hergestellt oder herstellbar ist.

Die Vorrichtung kann alternativ oder ergänzend einen Speicher, einen Prozessor, eine Empfangseinrichtung, eine Sendeeinrichtung oder eine beliebige Kombination davon aufweisen. Die Vorrichtung kann alternativ oder ergänzend alles, was von dieser aufgewiesen ist, wie insbesondere alle notwendigen Ressourcen, beispielsweise in Form von Software- und/oder Hardwareressourcen, bereitstellen und/oder verfügbar machen und/oder aufweisen. Die Vorrichtung kann vorteilhaft Mittel zum Senden des jeweiligen Datenstroms (etwa an eine andere Entität) aufweisen.

Die Vorrichtung zur Datenverarbeitung kann beispielsweise ein Cloud-Rechner sein. Die Vorrichtung zur Datenverarbeitung kann alternativ oder ergänzend ein verteiltes System darstellen. Beispielsweise können Teile der Vorrichtung zur Datenverarbeitung in der Cloud vorgesehen sein.

In Ausführungsformen ist die Vorrichtung zur Datenverarbeitung gemäß dem dritten Aspekt der Erfindung und die Vorrichtung zur Datenverarbeitung gemäß dem vierten Aspekt der Erfindung eine einheitliche Vorrichtung zur Datenverarbeitung.

Die Aufgabe wird durch die Erfindung gemäß einem **fünften Aspekt** dadurch gelöst, dass ein Computerprogrammprodukt, umfassend Befehle, die bei der Ausführung des Programms durch eine Vorrichtung zur Datenverarbeitung, insbesondere die Vorrichtung zur Datenverarbeitung gemäß dem dritten Aspekt der Erfindung und/oder gemäß dem vierten Aspekt der Erfindung, diese veranlassen, ein Verfahren gemäß dem ersten Aspekt der Erfindung und/oder gemäß dem zweiten Aspekt der Erfindung auszuführen, vorgeschlagen wird.

Das Computerprogrammprodukt kann beispielsweise als eine auf einem computerlesbaren Medium abgespeicherte oder abspeicherbare, Datei ausgestaltet sein.

Die Aufgabe wird durch die Erfindung gemäß einem **sechsten Aspekt** dadurch gelöst, dass eine Signalfolge, die insbesondere über ein Computernetzwerk übermittelbar ist, wobei die Signalfolge Daten eines in einem Verfahren gemäß dem ersten Aspekt der Erfindung empfangenen Datenstroms und/oder in einem Verfahren gemäß dem zweiten Aspekt der Erfindung erzeugten Datenstroms repräsentiert, vorgeschlagen wird.

Durch die Signalfolge können vorteilhaft die Daten des jeweiligen Datenstroms zwischen verschiedenen Teilnehmern ausgetauscht werden.

Beispielsweise kann die Signalfolge von einem entfernten Rechner empfangbar sein und/oder an einen entfernten Rechner sendbar sein.

Die Aufgabe wird durch die Erfindung gemäß einem **siebenten Aspekt** dadurch gelöst, dass ein Speichermedium, insbesondere zur Verwendung in einem Verfahren gemäß dem zweiten Aspekt der Erfindung und/oder in einer Vorrichtung gemäß dem vierten Aspekt der Erfindung, wobei auf dem Speichermedium, insbesondere in mehreren Speicherbereichen des Speichermediums, die keinen zusammenhängenden Adressraum aufweisen, zumindest einige Daten zumindest eines Datenstroms gespeichert sind, wobei auf dem Speichermedium Metadaten gespeichert sind, wobei die Metadaten spezifizieren, in welchen Speicherbereichen des Speichermediums Daten des Datenstroms gespeichert sind, vorgeschlagen wird.

Anhand der Metadaten als funktionelle Daten können daher die Daten eines fragmentiert gespeicherten Datenstroms ganz oder teilweise zu dem Datenstrom rekonstruiert werden.

Alle Vorteile, die in Bezug auf das Verfahren gemäß dem zweiten Aspekt der Erfindung beschrieben wurden, gelten dabei entsprechend auch für das Speichermedium gemäß dem siebenten Aspekt der Erfindung. Daher kann insoweit an dieser Stelle auf die vorherigen Ausführungen verwiesen werden.

Die mit der Vorrichtung zur Datenverarbeitung gemäß dem vierten Aspekt der Erfindung datentechnisch gekoppelten zumindest zwei Speichermedien und/oder die in einem Verfahren gemäß dem zweiten Aspekt der Erfindung eingesetzten zumindest zwei Speichermedien können jeweils ein Speichermedium gemäß dem siebenten Aspekt der Erfindung sein.

### Kurze Beschreibung der Zeichnungen

Weitere Merkmale und Vorteile der Erfindung ergeben sich aus der nachfolgenden Beschreibung, in der bevorzugte Ausführungsformen der Erfindung anhand schematischer Zeichnungen erläutert werden.

Dabei zeigen:
- Fig. 1: eine schematische Darstellung einer Vorrichtung zur Datenverarbeitung gemäß dem dritten Aspekt der Erfindung mit datentechnisch gekoppelten Sensoren und Speichermedien;
- Fig. 2: eine schematische Darstellung von von den Sensoren aus Fig. 1 empfangenen Datenströmen;
- Fig. 3: eine schematische Darstellung der Speichermedien aus Fig. 1 mit darauf gespeicherten elementaren Dateneinheiten der Datenströme sowie von Teilen der Datenströme;
- Fig. 4: eine schematische Darstellung einer Datei mit Metadaten;
- Fig. 5: eine schematische Darstellung einer Vorrichtung zur Datenverarbeitung gemäß dem vierten Aspekt der Erfindung mit datentechnisch gekoppelten Speichermedien;
- Fig. 6: ein Ablaufdiagramm eines Verfahrens gemäß dem ersten Aspekt der Erfindung; und
- Fig. 7: ein Ablaufdiagramm eines Verfahrens gemäß dem zweiten Aspekt der Erfindung.

### Beschreibung der Ausführungsformen

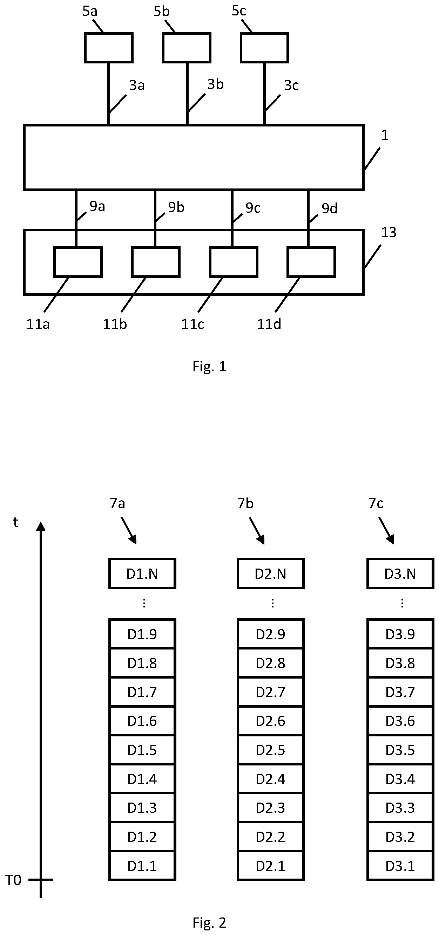

**Fig. 1** zeigt eine schematische Darstellung einer Vorrichtung zur Datenverarbeitung 1 gemäß dem dritten Aspekt der Erfindung.

Die Vorrichtung zur Datenverarbeitung 1 ist über Datenleitungen 3a...3c mit drei Sensoren 5a...5c datentechnisch gekoppelt. Die Sensoren 5a...5c können Sensoren eines Fahrzeugs sein. Die Sensoren 5a...5c können jeweils Sensordaten erzeugen, die von der Vorrichtung zur Datenverarbeitung 1 über die Datenleitungen 3a...3c empfangen werden können.

Die Vorrichtung zur Datenverarbeitung 1 empfängt über die Datenleitung 3a kontinuierlich einen spezifischen Datenstrom mit Sensordaten von dem Sensor 5a. Bei dem Sensor 5a handelt es sich beispielsweise um einen Kamerasensor. Der Kamerasensor kann beispielsweise mit einer bestimmten Bildwiederholungsrate (Framerate) Bilder von dessen Umgebung aufnehmen. Der spezifische Datenstrom enthält in diesem Fall dann die Daten von den zeitlich nacheinander aufgenommenen Einzelbildern des Kamerasensors.

Die Vorrichtung zur Datenverarbeitung 1 empfängt über die Datenleitung 3b kontinuierlich einen spezifischen Datenstrom mit Sensordaten von dem Sensor 5b. Bei dem Sensor 5b handelt es sich beispielsweise um einen Radarsensor. Der Radarsensor kann beispielsweise eine Mehrzahl von Paaren von Sender- und Empfangsantennen aufweisen und mit einer bestimmten Aufnahmerate Bilder von dessen Umgebung aufnehmen. Die übertragenen Sensordaten können dann beispielsweise die Bilder einer bereits von dem Sensor 5b aus den Sensorrohdaten rekonstruierten Darstellung der Umgebung im Ortsraum sein. Alternativ könnten auch lediglich die Sensorrohdaten (die etwa im Fourierraum vorliegen) übertragen werden.

Die Vorrichtung zur Datenverarbeitung 1 empfängt über die Datenleitung 3c kontinuierlich einen spezifischen Datenstrom mit Sensordaten von dem Sensor 5c. Bei dem Sensor 5c handelt es sich beispielsweise um einen Lidarsensor. Der Lidarsensor kann beispielsweise mit einer bestimmten Bildwiederholungsrate (Framerate) Bilder von dessen Umgebung aufnehmen. Dazu kann ein Laser des Lidarsensors dessen Umgebung abrastern. Der spezifische Datenstrom enthält in diesem Fall dann die Daten von den zeitlich nacheinander aufgenommenen Einzelbildern des Lidarsensors.

Die Vorrichtung zur Datenverarbeitung 1 könnte in Ausführungsformen auch mit mehr oder mit weniger Sensoren datentechnisch gekoppelt sein.

**Fig. 2** zeigt eine schematische Darstellung der von den Sensoren 5a...5c empfangenen spezifischen Datenströme.

Die Vorrichtung zur Datenverarbeitung 1 empfängt von dem Sensor 5a den spezifischen Datenstrom 7a. Der von dem Sensor 5a empfangene spezifische Datenstrom 7a ist hinsichtlich einiger technischer Eigenschaften vorab bekannt. Diese Eigenschaften sind in einer für den spezifischen Datenstrom 7a vorab erstellten Datenstrom-Beschreibung hinterlegt. Für den beispielhaft erwähnten Kamerasensor könnten die in der Datenstrom-Beschreibung hinterlegten technischen Eigenschaften des spezifischen Datenstroms 7a die Framerate und die Speichergröße eines Frames sein. Jede solche Gruppe von Daten eines Frames kann dabei als eine elementare Dateneinheit behandelt werden. Die Daten von aufeinanderfolgenden Frames (also elementaren Dateneinheiten) sind in dem Datenstrom 7a durch in dem spezifischen Datenstrom 7a enthaltene Steuerdaten erkennbar logisch voneinander getrennt. Beispielsweise kann mit den Steuerdaten der Beginn und/oder das Ende einer zu einer elementaren Dateneinheit gehörenden Datenmenge markiert sein (der jeweilige Sensor könnte beispielsweise von sich aus entsprechende Markierungen in den Datenstrom einfügen). Informationen zu diesen Steuerdaten sind vorteilhaft in der Datenstrom-Beschreibung des spezifischen Datenstroms 7a hinterlegt. In Fig. 2 ist der spezifische Datenstrom 7a als zeitlich aufeinanderfolgende elementare Dateneinheiten D1.1 ... D1.N dargestellt. Die erste elementare Dateneinheit D1.1 des spezifischen Datenstroms 7a wird zu einem Zeitpunkt T0 empfangen, die weiteren elementaren Dateneinheiten D1.2 ... D1.N werden zeitlich anschließend entsprechend der Inversen der Framerate empfangen. Es versteht sich von selbst, dass jede elementare Dateneinheit D1.1 ... D1.N ihrerseits durch mehrere Daten aufgebaut ist, etwa die Werte der einzelnen Pixel eines aufgenommenen Bildframes.

Gleichermaßen empfängt die Vorrichtung zur Datenverarbeitung 1 von dem Sensor 5b den spezifischen Datenstrom 7b und von dem Sensor 5c den spezifischen Datenstrom 7c. Auch die spezifischen Datenströme 7b und 7c sind jeweils hinsichtlich einiger technischer Eigenschaften vorab bekannt. Diese Eigenschaften sind in einer für den jeweiligen spezifischen Datenstrom 7b und 7c jeweils vorab erstellten Datenstrom-Beschreibung hinterlegt. Für den beispielhaft erwähnten Radar- und Lidarsensor könnten die in der jeweiligen Datenstrom-Beschreibung hinterlegten technischen Eigenschaften des jeweiligen spezifischen Datenstroms 7b bzw. 7c die Framerate und die Speichergröße eines Frames einer Radar- bzw. Lidar-Aufnahme sein. Auch hierbei kann jede solche Gruppe von Daten eines Frames als eine elementare Dateneinheit bezeichnet werden. In Fig. 2 sind daher auch die spezifischen Datenströme 7b und 7c jeweils als zeitlich aufeinanderfolgende elementare Dateneinheiten D2.1 ... D2.N bzw. D3.1 ... D3.N dargestellt. Die erste elementare Dateneinheit D2.1 des spezifischen Datenstroms 7b und die erste elementare Dateneinheit D3.1 des spezifischen Datenstroms 7c wird jeweils zu dem Zeitpunkt T0 empfangen, die weiteren elementaren Dateneinheiten D2.2 ... D1.N und D3.2 ... D3.N werden zeitlich anschließend entsprechend der Inversen der Framerate empfangen. Es versteht sich auch hier von selbst, dass jede elementare Dateneinheit D2.1 ... D1.N und D3.1 ... D3.N ihrerseits durch mehrere Daten aufgebaut ist, etwa die Werte der einzelnen Pixel eines aufgenommenen Bildframes.

Die in Fig. 2 entlang der positiven Zeitachse t weiter oben dargestellten elementaren Dateneinheiten eines spezifischen Datenstroms 7a...7c werden zu einem späteren Zeitpunkt empfangen als weiter unten dargestellte elementaren Dateneinheiten des jeweiligen spezifischen Datenstroms 7a...7c. Konkret wird also innerhalb beispielsweise des spezifischen Datenstroms 7a die elementare Dateneinheit D1.1 zeitlich vor der elementaren Dateneinheit D1.2 und diese zeitlich vor der elementaren Dateneinheit D1.3, usw. empfangen.

Die spezifischen Datenströme 7a...7c werden zeitlich parallel von den Sensoren 5a...5c empfangen. Daher werden auch die elementaren Dateneinheiten der unterschiedlichen Sensoren 5a...5c zeitlich parallel empfangen. In dem in Fig. 2 illustrierten Fall werden dabei jeweils alle n-ten (n=1...N) elementaren Dateneinheiten der drei spezifischen Datenströme 7a...7c zeitlich parallel empfangen. Das heißt alle ersten elementaren Dateneinheiten D1.1, D2.1 und D3.1 werden zeitlich parallel empfangen, alle zweiten elementaren Dateneinheiten D1.2, D2.2 und D3.2 werden zeitlich parallel empfangen, usw. Dieser Sonderfall ist vorliegend lediglich aus Gründen der besseren Darstellbarkeit gewählt. Allgemein können die n-ten elementaren Dateneinheiten unterschiedlicher spezifischer Datenströme beliebig versetzt zueinander empfangen werden. Der zeitliche Versatz von elementaren Dateneinheiten gleicher Nummer n (also etwa D1.4 und D2.4) zweier spezifischer Datenströme ist insbesondere davon abhängig, welche Datenmenge jeweils innerhalb einer elementaren Dateneinheit enthalten ist und mit welcher Datenrate die Daten über die Datenleitungen durch die Vorrichtung zur Datenverarbeitung 1 von den jeweiligen Sensoren empfangen werden. In dem in Fig. 2 gezeigten Sonderfall wird davon ausgegangen, dass für jeden Sensor 5a...5c die Datenmenge jeder elementaren Dateneinheit innerhalb der gleichen Zeit von dem jeweiligen Sensor zur Vorrichtung zur Datenverarbeitung übertragen wird. Außerdem kann die Anzahl an elementaren Dateneinheiten N der einzelnen spezifischen Datenströme 7a...7c verschieden sein.

Beispielsweise werden die Sensordaten während einer Testfahrt mit dem eingangs erwähnten Fahrzeug von den Sensoren 5a...5c erzeugt, um diese anschließend für eine datengetriebene Entwicklung von Anwendungen für Fahrerassistenzsysteme und autonomes Fahren einzusetzen. Dazu müssen die spezifischen Datenströme während der Testfahrt gespeichert werden.

Die Vorrichtung zur Datenverarbeitung 1 (Fig. 1) ist dafür über vier Datenleitungen 9a...9d mit vier Speichermedien 11a...11d einer Speichereinheit 13 datentechnisch gekoppelt. Die von den drei Sensoren 5a...5c empfangenen Daten können auf diesen Speichermedien 11a...11d gespeichert werden.

Die Vorrichtung zur Datenverarbeitung 1 teilt dabei jeden spezifischen Datenstrom 7a...7c in jeweils die elementaren Dateneinheiten D1.n, D2.n und D3.n (n=1...N) auf, wie sie bereits oben in Bezug auf Fig. 2 beschrieben wurden. Die Aufteilung des spezifischen Datenstroms 7a in die elementaren Dateneinheiten D1.n erfolgt also anhand der für den spezifischen Datenstrom 7a erstellten Datenstrom-Beschreibung (insbesondere durch Aufteilung des spezifischen Datenstroms 7a an den Stellen, an denen eine Markierung festgestellt wird, die als Steuerdatum in der Datenstrom-Beschreibung hinterlegt ist). Die Aufteilung des spezifischen Datenstroms 7b in die elementaren Dateneinheiten D2.n erfolgt also anhand der für den spezifischen Datenstrom 7b erstellten Datenstrom-Beschreibung (insbesondere durch Aufteilung des spezifischen Datenstroms 7b an den Stellen, an denen eine Markierung festgestellt wird, die als Steuerdatum in der Datenstrom-Beschreibung hinterlegt ist). Und die Aufteilung des spezifischen Datenstroms 7c in die elementaren Dateneinheiten D3.n erfolgt also anhand der für den spezifischen Datenstrom 7c erstellten Datenstrom-Beschreibung (insbesondere durch Aufteilung des spezifischen Datenstroms 7c an den Stellen, an denen eine Markierung festgestellt wird, die als Steuerdatum in der Datenstrom-Beschreibung hinterlegt ist). Die Aufteilung eines Datenstroms 7a...7c in die elementare Dateneinheiten D1.n, D2.n und D3.n bedeutet hier also das Gruppieren von Daten des jeweiligen Datenstroms 7a...7c, um dadurch die einzelnen elementaren Dateneinheiten zu erhalten. Jede so erhaltene elementare Dateneinheit kann vorteilhaft gerade den Daten eines Frames des jeweiligen Sensors 5a...5c (etwa der Kamerasensors, des Radarsensors oder des Lidarsensors) entsprechen.

Um die Aufteilung der einzelnen spezifischen Datenströme 7a...7c in die elementaren Dateneinheiten anhand der jeweiligen Steuerdaten vornehmen zu können, können die spezifischen Datenströme 7a...7c beispielsweise kontinuierlich auf eine entsprechende Markierung hin analysiert werden. In Ausführungsformen könnten die Daten eines spezifischen Datenstroms 7a...7c auch anhand der in der jeweiligen Datenstrom-Beschreibung angegebenen Frequenz oder Speichergröße eines Datenframes zu den einzelnen elementaren Dateneinheiten gruppiert werden.

Die Daten der einzelnen elementaren Dateneinheiten D1.n, D2.n und D3.n der spezifischen Datenströme 7a...7c werden dabei jeweils in einem flüchtigen RAM-Speicher zwischengespeichert, ehe diese final gespeichert werden. Die für die elementaren Dateneinheiten D1.n, D2.n und D3.n der spezifischen Datenströme 7a...7c dafür zu reservierende Speichergröße kann anhand der Datenstrom-Beschreibung vorab festgelegt und somit die Ressourcennutzung optimiert werden.

Die einzelnen elementaren Dateneinheiten D1.n, D2.n und D3.n der spezifischen Datenströme 7a...7c werden über die vier Speichermedien 11a...11d verteilt gespeichert. Die Vorrichtung zur Datenverarbeitung 1 nimmt die verteilte Speicherung gemäß einer Verteilungs-Vorschrift vor. Diese Verteilungs-Vorschrift wird basierend auf den drei zu den spezifischen Datenströmen 7a...7c vorliegenden Datenstrom-Beschreibungen (siehe Ausführungen oben) vor Beginn der Datenaufzeichnung erstellt. Dadurch kann die Verteilung der elementaren Dateneinheiten auf die einzelnen Speichermedien 11a...1d beispielsweise in Abhängigkeit der Datengröße der unterschiedlichen elementaren Dateneinheiten D1.n, D2.n und D3.n erfolgen.

Auch wenn im vorliegenden Ausführungsbeispiel die n-ten elementaren Dateneinheiten der drei spezifischen Datenströme 7a...7c jeweils alle zeitlich parallel empfangen werden, können diese dennoch unterschiedliche Datenmengen aufweisen (wobei beispielsweise wegen unterschiedlichen Datenraten auf den Datenleitungen 3a...3c dennoch der zeitlich parallele Empfang jeweils der n-ten Dateneinheit erfolgt), und damit auch jeweils einen unterschiedlichen Speicherplatzbedarf auf den Speichermedien 11a...11d und eine unterschiedliche Schreibzugriff-Dauer auf die Speichermedien 11a...11d erfordern.

Die Verteilungs-Vorschrift gibt vorliegend eine zyklische Reihenfolge vor, gemäß der die elementaren Dateneinheiten D1.n, D2.n und D3.n der spezifischen Datenströme 7a...7c auf die einzelnen Speichermedien 11a...11d gespeichert werden. Beispielhaft wird, ohne Beschränkung der Allgemeinheit, den elementaren Dateneinheiten der Reihe nach das Speichermedium 11a, dann das Speichermedium 11b, dann das Speichermedium 11c, dann das Speichermedium 11d, dann wieder das Speichermedium 11a, usw. zugeordnet. Außerdem gibt die Verteilungs-Vorschrift vorliegend vor, dass bei zeitlich parallel eintreffenden elementaren Dateneinheiten unterschiedlicher spezifischer Datenströme 11a...11c zunächst die elementare Dateneinheit des spezifischen Datenstroms 7a einem Speichermedium zugeordnet wird, dann die elementare Dateneinheit des spezifischen Datenstroms 7b einem Speichermedium zugeordnet wird und dann die elementare Dateneinheit des spezifischen Datenstroms 7c einem Speichermedium zugeordnet wird.

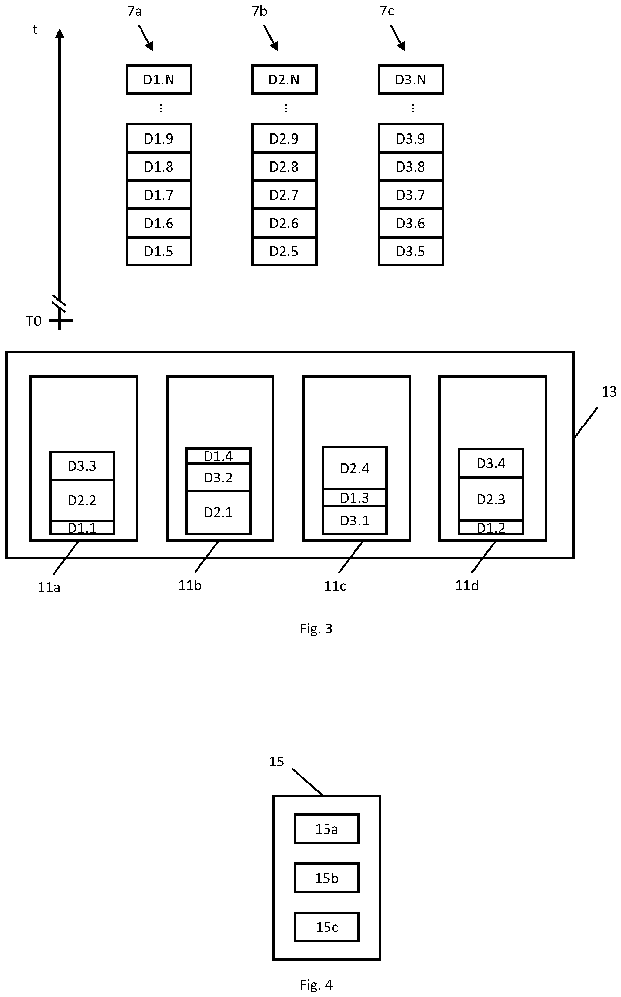

**Fig. 3** zeigt eine schematische Darstellung der Speichermedien 11a...11d aus Fig. 1 mit darauf gespeicherten elementaren Dateneinheiten der spezifischen Datenströme 7a...7c sowie von Teilen der Datenströme 7a...7b.

Zu dem in Fig. 3 dargestellten Zeitpunkt wurden bereits die elementaren Dateneinheiten D1.1 bis D1.4 des spezifischen Datenstroms 7a, die elementaren Dateneinheiten D2.1 bis D2.4 des spezifischen Datenstroms 7b und die elementaren Dateneinheiten D3.1 bis D3.4 des spezifischen Datenstroms 7c über die vier Speichermedien 11a...11d verteilt gespeichert. Daher sind in Fig. 3 oben die bereits gespeicherten elementaren Dateneinheiten nicht mehr als Teil der spezifischen Datenströme 7a...7c dargestellt.

Unter Anwendung der Verteilungs-Vorschrift (Speicherort der eintreffenden elementaren Dateneinheiten zyklisch auf Speichermedien 11a-11b-11c-11d, wobei für zeitlich parallel eintreffende elementare Dateneinheiten unterschiedlicher spezifischer Datenströme die des spezifischen Datenstroms 7a höher als die des spezifischen Datenstroms 7b und diese höher als die des spezifischen Datenstroms 7c priorisiert sind) ergibt sich damit
eine Belegung des Speichermediums 11a mit den elementaren Dateneinheiten D1.1 des spezifischen Datenstroms 7a, D2.2 des spezifischen Datenstroms 7b und D3.3 des spezifischen Datenstroms 7c,
eine Belegung des Speichermediums 11b mit den elementaren Dateneinheiten D2.1 des spezifischen Datenstroms 7b, D3.2 des spezifischen Datenstroms 7c und D1.4 des spezifischen Datenstroms 7a,
eine Belegung des Speichermediums 11b mit den elementaren Dateneinheiten D3.1 des spezifischen Datenstroms 7c, D1.3 des spezifischen Datenstroms 7a und D2.4 des spezifischen Datenstroms 7b, und
eine Belegung des Speichermediums 11d mit den elementaren Dateneinheiten D1.2 des spezifischen Datenstroms 7a, D2.3 des spezifischen Datenstroms 7b und D3.4 des spezifischen Datenstroms 7c.

Das Speichern der unterschiedlichen elementaren Dateneinheiten auf die einzelnen Speichermedien 11a...11d erfolgt dabei durch einen zeitlich parallelen Schreibzugriff auf die Speichermedien 11a...11d. Beispielsweise werden also die elementaren Dateneinheiten D1.1, D2.1, D3.1 und D1.2 zeitlich parallel gespeichert, jedenfalls soweit die einzelnen Daten bereits vorliegen. Durch das parallele Beschreiben der Speichermedien 11a...11d kann die zulässige Gesamt-Eingangsbandbreite, also die Summe der Bandbreiten der einzelnen spezifischen Datenströme 11a...11c) erhöht werden.

Im nächsten Schritt würde dann die nächsten elementaren Dateneinheiten, soweit diese bereits empfangen sind oder im Weiteren empfangen werden, gemäß der Verteilungs-Vorschrift auf den Speichermedium gespeichert werden.

In Fig. 3 unten soll durch die unterschiedliche Höhe der schematisch dargestellten (auf den Speichermedien 11a...11d gespeicherten) elementaren Dateneinheiten die unterschiedliche Speichergröße (und damit Datenmenge) der elementaren Dateneinheiten der drei spezifischen Datenströme 7a...7c illustriert werden. Die Speichergröße einer elementaren Dateneinheit D2.n des spezifischen Datenstroms 7b ist demnach größer als die Speichergröße einer elementaren Dateneinheit D3.n des spezifischen Datenstroms 7c und diese ist größer als die Speichergröße einer elementaren Dateneinheit D1.n des spezifischen Datenstroms 7a. Die Speichergröße der einzelnen elementaren Dateneinheiten D1.n, D2.n und D3.n eines einzelnen spezifischen Datenstroms 7a...7c sind jedoch vorliegend identisch.

Die Verteilungs-Vorschrift ist derart ermittelt worden, dass sich eine möglichst gleichmäßige Befüllung der einzelnen Speichermedien 11a...11d mit den elementaren Dateneinheiten ergibt. Dazu kann bei der Erstellung der Verteilungs-Vorschrift auch auf Algorithmen zur Lösung eines "Behälterproblems" zurückgegriffen werden. Außerdem wird durch die Verteilungs-Vorschrift sichergestellt, dass bei dem Schreibzugriff auf die Speichermedien 11a...11d deren jeweilige maximale Bandbreite nicht überschritten wird. Da anhand der einzelnen Datenstrom-Beschreibungen im Voraus Kenntnis über die zu erwartende Datenmenge (und damit die Anzahl an elementaren Dateneinheiten) pro Zeiteinheit und pro spezifischer Datenstrom zumindest teilweise besteht, kann die Verteilungs-Vorschrift derart erzeugt werden, dass ein möglichst effizientes verteiltes Speichern der elementaren Dateneinheiten durchgeführt wird. So können durch die Verteilungs-Vorschrift die maximal zulässigen Bandbreiten (bei Schreibzugriff) der einzelnen Speichermedien 11a...11d genauso berücksichtigt werden, wie die benötigte Speichermenge pro elementarer Dateneinheit für die unterschiedlichen spezifischen Datenströme, und damit der Speichervorgang optimiert werden.

Durch die beschriebene Aufteilung der spezifischen Datenströme 7a...7c in elementare Dateneinheiten basierend auf den Datenstrom-Beschreibungen sowie das verteilte Speichern der elementaren Dateneinheiten auf den Speichermedien 11a...11d basierend auf der Verteilungs-Vorschrift können die Daten der spezifischen Datenströme 7a...7c auch bei einer hohen Gesamtbandbreite in Echtzeit gespeichert werden. Denn die jeweils maximal zulässige Bandbreite der einzelnen Speichermedien 11a...11d steht aufgrund der Aufteilung in elementare Dateneinheiten und das zeitlich parallele Beschreiben der Speichermedien 11a...11d vorteilhaft in Summe zur Verfügung. Es können also vorteilhaft Eingangsdaten mit einer Gesamtbandbreite gespeichert werden, die mit den Einzelbandbreiten der Speichermedien 11a...11d skaliert.

Die Speichergröße der einzelnen elementaren Dateneinheiten eines einzelnen spezifischen Datenstroms 7a...7c werden, wie erwähnt, als identisch angenommen. In Ausführungsformen kann die Speichergröße der einzelnen elementaren Dateneinheiten zumindest eines spezifischen Datenstroms 7a...7c aber auch zeitabhängig variieren. Dies kann beispielsweise dann auftreten, wenn einer der Sensoren 5a...5c zeitabhängig in unterschiedlichen Betriebsmodi betrieben wird und dadurch die Datenmenge einer elementaren Dateneinheit oder der Zeitabstand zwischen den elementaren Dateneinheiten des jeweiligen spezifischen Datenstroms zeitabhängig variieren. Beispielsweise könnte der Kamerasensor (Sensor 5a) zeitlich nacheinander zunächst in einem Normalmodus mit einer ersten Auflösung und anschließend in einem Alarmmodus mit einer zweiten Auflösung, die größer als die erste Auflösung ist, betrieben werden. Zu diesem Zweck könnte die Datenstrom-Beschreibung und/oder die Verteilungs-Vorschrift auf denjenigen Betriebsmodus mit der größten Datenrate ("worst case") ausgerichtet sein. Hierbei wird gegebenenfalls in Kauf genommen, dass während eines Betriebsmodus (im Beispiel also während des Normalmodus) die reservierten Ressourcen nicht voll ausgeschöpft werden. Alternativ könnte in Abhängigkeit des Betriebsmodus auch eine unterschiedliche Datenstrom-Beschreibung und/oder Verteilungs-Vorschrift ausgewählt und angewendet werden. Dadurch könnte eine für jeden Betriebsmodus optimierte Ressourcennutzung ermöglicht werden.

Nachdem jedenfalls alle elementaren Dateneinheiten aller spezifischen Datenströme 7a...7c auf den Speichermedien 11a...11d gespeichert wurden, wird auf jedem Speichermedium 11a...11d eine Datei 15 mit Metadaten hinterlegt.

**Fig. 4** zeigt eine schematische Darstellung der Datei 15.

In einem ersten Metadaten-Bereich 15a der Datei 15 sind Informationen zu den beteiligten Speichermedien 11a...11d enthalten. Beispielsweise kann dazu eine eindeutige Kennung eines jeden Speichermediums 11a...11d in dem Metadaten-Bereich 15a hinterlegt werden.

In einem zweiten Metadaten-Bereich 15b der Datei 15 sind Informationen zu den auf dem jeweiligen Speichermedium 11a...11d, auf dem die Datei 15 gespeichert wird, gespeicherten elementaren Dateneinheiten. Beispielsweise kann dazu zu jeder auf dem jeweiligen Speichermedium gespeicherten elementaren Dateneinheit der spezifische Datenstrom, dessen Daten die jeweilige elementare Dateneinheit teilweise enthält, die Nummer n der elementaren Dateneinheit innerhalb des spezifischen Datenstroms, und/oder eine Start- und/oder Endadresse eines Speicherbereichs, innerhalb der die Daten der elementaren Dateneinheit auf dem jeweiligen Speichermedium gespeichert sind, hinterlegt werden.

In einem dritten Metadaten-Bereich 15c der Datei 15 sind Informationen zu der Datenaufzeichnung hinterlegt, etwa ein Zeitstempel in Bezug auf den Start der Datenaufzeichnung und ein Zeitstempel in Bezug auf das Ende der Datenaufzeichnung.

Mit der Vorrichtung zur Datenverarbeitung 1 (sowie mit dem beschriebenen, durch diese ausgeführten Verfahren) kann folglich eine Speicherung von Datenströmen selbst hoher Bandbreite auf mehreren Speichermedien effizient durchgeführt werden. Dadurch kann auch während einer Testfahrt die nötige Bandbreite für eine simultane Aufzeichnung mehrerer Datenströme von unterschiedlichen Sensoren bereitgestellt werden. Dies ist für eine datengetriebene Entwicklung von Anwendungen für Fahrerassistenzsysteme und autonomes Fahren sehr vorteilhaft.

Die auf den Speichermedien 11a...1d verteilt gespeicherten Daten der einzelnen spezifischen Datenströme 7a...7c können beispielsweise später dazu eingesetzt werden, ein neuronales Netzwerk zu trainieren. Dazu müssen die einzelnen spezifischen Datenströme aus den verteilt gespeicherten elementaren Dateneinheiten rekonstruiert werden.

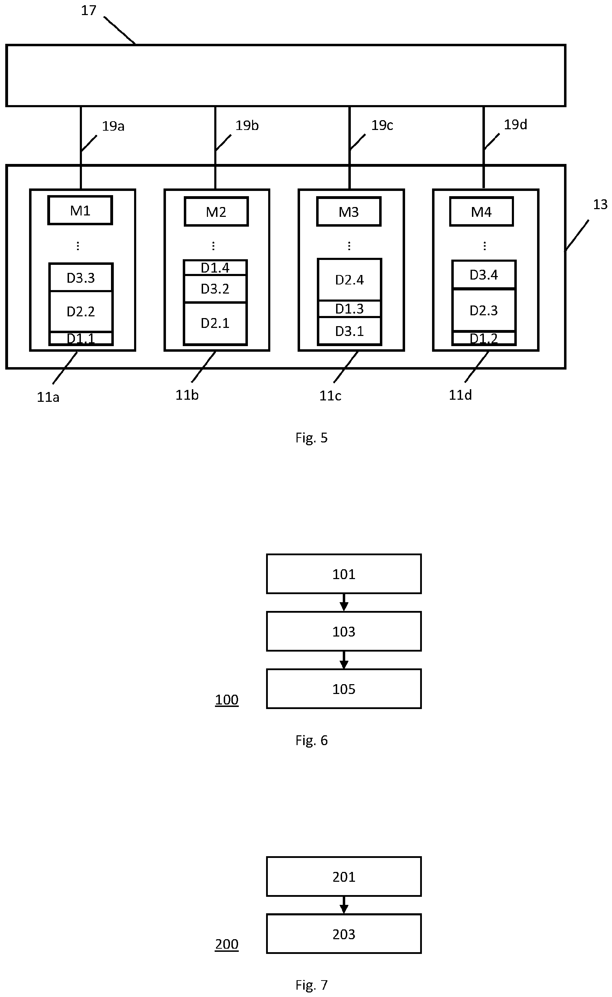

**Fig. 5** zeigt eine schematische Darstellung einer Vorrichtung zur Datenverarbeitung 17 gemäß dem vierten Aspekt der Erfindung. Die Vorrichtung zur Datenverarbeitung 17 kann zur Rekonstruktion der ursprünglichen spezifischen Datenströme 7a...7c eingesetzt werden.

Die Vorrichtung zur Datenverarbeitung 17 ist dazu über vier Datenleitungen 19a...19d mit den (zuvor mit der Vorrichtung zur Datenverarbeitung 1 gekoppelten) vier Speichermedien 11a...11d der Speichereinheit 13 datentechnisch gekoppelt. Beispielsweise kann dazu die Speichereinheit 13 von einem Ort der Vorrichtung zur Datenverarbeitung 1 an einen anderen Ort der Vorrichtung zur Datenverarbeitung 17 verbracht werden.

Im Gegensatz zu der oben in Bezug auf die in Fig. 3 unten dargestellte Situation, sind nun alle elementaren Dateneinheiten D1.n, D2.n und D3.n aller spezifischer Datenströme 7a...7c auf den Speichermedien 11a...11d gespeichert (auch wenn in Fig. 5 lediglich die auch in Fig. 3 unten bereits eingezeichneten elementaren Dateneinheiten dargestellt sind, nicht aber die übrigen elementaren Dateneinheiten aus Fig. 3 oben). Zudem ist auf jedem Speichermedium 11a...11d eine Datei M1...M4 mit Metadaten gespeichert. Jede Datei kann wie die in Bezug auf Fig. 4 beschriebene Datei 15 aufgebaut sein und die entsprechenden Informationen enthalten. Während in den vier Dateien M1...M4 die Informationen in den ersten und dritten Metadaten-Bereichen jeweils identisch sind, unterscheiden sich die in dem jeweiligen zweiten Metadaten-Bereich hinterlegten Informationen zu den elementaren Dateneinheiten von Speichermedium zu Speichermedium.

Für eine Rekonstruktion der ursprünglichen Datenströme (spezifische Datenströme 7a...7c) werden zunächst die Metadaten aus den Dateien M1...M4 ausgewertet. Anhand der (identischen) Informationen im ersten Metadaten-Bereich einer jeden Datei M1...M4 kann das Vorliegen aller vier Speichermedien 11a...11d geprüft und bestätigt werden. Anhand der Informationen aus dem zweiten Metadaten-Bereich aller vier Dateien M1...M4 kann für jede elementare Dateneinheit D1.n des spezifischen Datenstroms 11a sowohl das Speichermedium 11a...11d als auch die Start- und Endadresse des Speicherbereichs des betreffenden Speichermediums, in dem deren Daten gespeichert sind, ermittelt werden. Indem die Daten der einzelnen elementaren Dateneinheiten D1.n aus dem jeweiligen Speicherberiech gelesen und in die richtige Reihenfolge n=1...N gebracht werden, kann der spezifische Datenstrom 7a rekonstruiert werden. Ein identisches Vorgehen für jede elementare Dateneinheit D2.n des spezifischen Datenstroms 11b und für jede elementare Dateneinheit D3.n des spezifischen Datenstroms 11c ermöglicht eine Rekonstruktion der spezifischen Datenströme 7b und 7c. Die rekonstruierten Datenströme können für die weitere Nutzung beispielsweise auf einem Datenträger gespeichert oder über ein Computernetzwerk, wie dem Internet, übertragen werden.

In Ausführungsformen kann die Vorrichtung zur Datenverarbeitung 17 identisch mit der Vorrichtung zur Datenverarbeitung 1 sein.

Die Daten der empfangenen und der rekonstruierten spezifischen Datenströme 7a...7c können jeweils eine Signalfolge gemäß dem sechsten Aspekt der Erfindung sein.

Die in Bezug auf Fig. 5 beschriebenen Speichermedien 11a...11d können jeweils ein Speichermedium gemäß dem siebenten Aspekt der Erfindung sein.

**Fig. 6** zeigt ein Ablaufdiagramm 100 eines Verfahrens gemäß dem ersten Aspekt der Erfindung.

Das Verfahren kann zur Durchführung einer Datenaufzeichnung dienen, etwa einer Datenaufzeichnung, wie sie oben in Bezug auf Figs. 1-4 beschrieben worden ist.

In 101 wird zumindest ein Datenstrom zur Aufzeichnung dessen Daten empfangen, wobei darunter zumindest ein spezifischer Datenstrom ist.

In 103 wird jeder spezifische Datenstrom basierend auf einer für den jeweiligen spezifischen Datenstrom vorgegebenen Datenstrom-Beschreibung in elementare Dateneinheiten aufgeteilt.

In 105 werden die elementaren Dateneinheiten aller spezifischen Datenströme auf zumindest zwei Speichermedien verteilt gespeichert.

Beispielsweise kann in 105 das verteilte Speichern der elementaren Dateneinheiten der spezifischen Datenströme auf die zumindest zwei Speichermedien basierend auf einer Verteilungs-Vorschrift durchgeführt werden. Anhand der Verteilungs-Vorschrift kann jeder elementaren Dateneinheit der spezifischen Datenströme jeweils zumindest eines und/oder genau eines der zumindest zwei Speichermedien als Speicherort zugewiesen werden, und die einzelnen elementaren Dateneinheiten können auf dem diesen jeweils zugewiesenen Speichermedium gespeichert werden.

Das Verfahren kann beispielsweise von der in Bezug auf Fig. 1 beschriebenen Vorrichtung zur Datenverarbeitung 1 ausgeführt werden, die dazu entsprechend eingerichtet sein kann.

**Fig. 7** zeigt ein Ablaufdiagramm 200 eines Verfahrens gemäß dem zweiten Aspekt der Erfindung.

Das Verfahren kann zur Erzeugung zumindest eines Datenstroms aus, insbesondere mit dem Verfahren gemäß dem ersten Aspekt der Erfindung, über zumindest zwei Speichermedien oder Quelldateien verteilt gespeicherte elementare Dateneinheiten dienen. Dies kann eine Rekonstruktion sein, wie sie etwa oben in Bezug auf Fig. 5 beschrieben worden ist.

In 201 werden anhand von Metadaten zumindest zwei elementare Dateneinheiten von unterschiedlichen Speichermedien oder aus unterschiedlichen Quelldateien abgerufen.

In 203 werden die zumindest zwei elementaren Dateneinheiten in eine zeitliche Reihenfolge gebracht, und dadurch der zumindest eine Datenstrom zumindest teilweise erzeugt.

Das Verfahren kann beispielsweise von der in Bezug auf Fig. 5 beschriebenen Vorrichtung zur Datenverarbeitung 17 ausgeführt werden, die dazu entsprechend eingerichtet sein kann.

Die in der vorangehenden Beschreibung, in den Zeichnungen und in den Ansprüchen offenbarten Merkmale können sowohl einzeln als auch in beliebiger Kombination wesentlich für die Erfindung in ihren verschiedenen Ausführungsformen sein.

### Bezugszeichenliste

- 1: Vorrichtung zur Datenverarbeitung
- 3a, 3b, 3c: Datenleitung
- 5a, 5b, 5c: Sensor
- 7a, 7b, 7c: Spezifischer Datenstrom
- 9a, 9b, 9c, 9d: Datenleitung
- 11a, 11b, 11c, 11d: Speichermedium
- 13: Speichereinheit
- 15: Datei mit Metadaten
- 15a, 15b, 15c: Metadaten-Bereich
- 17: Vorrichtung zur Datenverarbeitung
- 19a, 19b, 19c, 19d: Datenleitung
- D1.n: n-te elementare Dateneinheit des spezifischen Datenstroms 7a
- D2.n: n-te elementare Dateneinheit des spezifischen Datenstroms 7b
- D3.n: n-te elementare Dateneinheit des spezifischen Datenstroms 7c
- M1, M2, M3, M4: Datei mit Metadaten
- n: Nummer einer elementaren Dateneinheit eines spezifischen Datenstroms
- N: Anzahl elementarer Dateneinheiten eines spezifischen Datenstroms
- t: Zeitachse
- T0: Zeitpunkt
- 100: Ablaufdiagramm
- 101: Empfangen zumindest eines Datenstroms zur Aufzeichnung dessen Daten, wobei darunter zumindest ein spezifischer Datenstrom ist
- 103: Aufteilen eines jeden spezifischen Datenstroms basierend auf einer für den jeweiligen spezifischen Datenstrom vorgegebenen Datenstrom-Beschreibung in elementare Dateneinheiten
- 105: Verteiltes Speichern der elementaren Dateneinheiten aller spezifischen Datenströme auf zumindest zwei Speichermedien
- 200: Ablaufdiagramm
- 201: Abrufen von zumindest zwei elementare Dateneinheiten von unterschiedlichen Speichermedien oder aus unterschiedlichen Quelldateien, anhand von Metadaten.
- 203: Bringen der zumindest zwei elementaren Dateneinheiten in eine zeitliche Reihenfolge, und dadurch zumindest teilweise Erzeugen des zumindest einen Datenstroms.

## Patentansprüche

1. Verfahren zur Durchführung einer Datenaufzeichnung, wobei zumindest ein Datenstrom zur Aufzeichnung dessen Daten empfangen wird und darunter zumindest ein spezifischer Datenstrom ist, wobei jeder spezifische Datenstrom basierend auf einer für den jeweiligen spezifischen Datenstrom vorgegebenen Datenstrom-Beschreibung in elementare Dateneinheiten aufgeteilt wird, und die elementaren Dateneinheiten aller spezifischen Datenströme auf zumindest zwei Speichermedien verteilt gespeichert werden,
wobei das verteilte Speichern der elementaren Dateneinheiten der spezifischen Datenströme auf die zumindest zwei Speichermedien basierend auf einer Verteilungs-Vorschrift durchgeführt wird,
wobei anhand der Verteilungs-Vorschrift jeder elementaren Dateneinheit der spezifischen Datenströme jeweils zumindest eines und/oder genau eines der zumindest zwei Speichermedien als Speicherort zugewiesen wird, und die einzelnen elementaren Dateneinheiten auf dem diesen jeweils zugewiesenen Speichermedium gespeichert werden.

2. Verfahren nach Anspruch 1, wobei die spezifischen Datenströme jeweils kontinuierlich empfangen und in elementare Dateneinheiten aufgeteilt werden und/oder wobei zwei oder mehr als zwei Datenströme empfangen werden und darunter zwei oder mehr als zwei spezifische Datenströme sind, die insbesondere zumindest teilweise zeitlich parallel empfangen werden.

3. Verfahren nach einem der vorangehenden Ansprüche, wobei
(a) die für die einzelnen spezifischen Datenströme vorgegebenen Datenstrom-Beschreibungen jeweils eine oder mehrere technische Spezifikationen des jeweiligen spezifischen Datenstroms aufweisen, basierend auf welchen das Aufteilen des jeweiligen spezifischen Datenstroms in elementare Dateneinheiten zumindest teilweise durchgeführt wird,
(b) die für die einzelnen spezifischen Datenströme vorgegebenen Datenstrom-Beschreibungen jeweils Informationen zu (i) einer Speichergröße einer elementaren Dateneinheit des jeweiligen spezifischen Datenstroms und/oder (ii) einer Frequenz, mit der die Daten aufeinanderfolgender elementarer Dateneinheiten innerhalb des jeweiligen spezifischen Datenstroms, empfangen werden, aufweisen, basierend auf welchen das Aufteilen des jeweiligen spezifischen Datenstroms in elementare Dateneinheiten zumindest teilweise durchgeführt wird
und/oder
(c) das Aufteilen eines spezifischen Datenstroms in elementare Dateneinheiten aufweist, die Daten des jeweiligen spezifischen Datenstroms basierend auf der für den jeweiligen spezifischen Datenstrom vorgegebenen Datenstrom-Beschreibung zu gruppieren und dadurch die elementaren Dateneinheiten zu erhalten.

4. Verfahren nach einem der vorangehenden Ansprüche, wobei eine elementare Dateneinheit eines spezifischen Datenstroms jeweils Daten eines von einem Sensor aufgenommenen Einzelbildes oder eine Zeile oder ein Pixel eines solchen Einzelbildes aufweist.

5. Verfahren nach einem der vorangehenden Ansprüche, wobei die elementaren Dateneinheiten zumindest eines, vorzugsweise aller, der zumindest einen spezifischen Datenströme auf mehreren der zumindest zwei Speichermedien verteilt gespeichert werden, insbesondere nach Maßgabe der Verteilungs-Vorschrift und/oder wobei durch die Verteilungs-Vorschrift für zumindest einen, vorzugsweise für jeden, spezifischen Datenstrom eine, insbesondere zyklische, Reihenfolge von Speichermedien vorgegeben wird, gemäß der die elementaren Dateneinheiten des jeweiligen spezifischen Datenstroms der Reihe nach auf den Speichermedien gespeichert werden.

6. Verfahren nach einem der vorangehenden Ansprüche, wobei
(i) die Verteilungs-Vorschrift derart ermittelt wird, dass bei dem verteilten Speichern der elementaren Dateneinheiten der spezifischen Datenströme auf die zumindest zwei Speichermedien eine für den Schreibzugriff auf die einzelnen Speichermedien jeweils zulässige maximale Datenrate jeweils nicht überschritten wird,
(ii) die Verteilungs-Vorschrift derart ermittelt wird, dass bei dem verteilten Speichern der elementaren Dateneinheiten der spezifischen Datenströme auf die zumindest zwei Speichermedien eine gleichmäßige Befüllung der einzelnen Speichermedien mit Daten erreicht wird,
und/oder
(iii) für jedes der zumindest zwei Speichermedien jeweils eine maximale Datenrate, mit der das jeweilige Speichermedium beschreibbar ist, als Bandbreiteninformation und/oder ein freier Speicherplatz als Kapazitätsinformation vorbekannt ist oder sind und/oder automatisiert ermittelt wird oder werden, und wobei vorzugsweise die Verteilungs-Vorschrift basierend auf den Bandbreiteninformationen und/oder Kapazitätsinformationen der Speichermedien ermittelt wird.

7. Verfahren nach einem der vorangehenden Ansprüche, wobei die spezifischen Datenströme jeweils Sensorsignale repräsentieren, die insbesondere von bildgebenden Sensoren und/oder von unterschiedlichen Sensoren stammen,
wobei vorzugsweise (a) zumindest ein spezifischer Datenstrom Sensorsignale eines Kamerasensors, Radarsensors, Lidarsensors und/oder Ultraschallsensors repräsentiert und/oder (b) zumindest ein Sensor zeitlich nacheinander in unterschiedlichen Betriebsmodi betrieben wird, und sich in Abhängigkeit des Betriebsmodus zumindest eine technische Spezifikation des von dem Sensor empfangenen spezifischen Datenstroms, wie (i) eine Datenrate, (ii) eine Datengröße einer elementaren Dateneinheit und/oder (iii) eine Frequenz, mit der neue elementare Dateneinheiten empfangen werden, ändert,
wobei vorzugsweise die Verteilungs-Vorschrift derart ermittelt wird, dass in jedem Betriebsmodus des Sensors die elementaren Dateneinheiten auf die zumindest zwei Speichermedien verteilt gespeichert werden.

8. Verfahren nach einem der vorangehenden Ansprüche, wobei die Datenstrom-Beschreibung des von dem Sensor empfangenen spezifischen Datenstroms und/oder die Verteilungs-Vorschrift jeweils zumindest teilweise für denjenigen Betriebsmodus ermittelt wird, bei dem der von dem Sensor empfangene spezifische Datenstrom die größte Datenrate aufweist.

9. Verfahren nach einem der vorangehenden Ansprüche, wobei in Abhängigkeit des ausgewählten Betriebsmodus des Sensors zwischen unterschiedlichen Datenstrom-Beschreibungen des von dem Sensor empfangenen spezifischen Datenstroms und/oder Verteilungs-Vorschriften gewechselt wird.

10. Verfahren nach einem der vorangehenden Ansprüche, wobei die elementaren Dateneinheiten zumindest eines spezifischen Datenstroms, vorzugsweise aller spezifischen Datenströme, jeweils, insbesondere redundanzfrei, auf zumindest zwei der zumindest zwei Speichermedien verteilt gespeichert werden.

11. Verfahren nach einem der vorangehenden Ansprüche, wobei die Datenaufzeichnung in Echtzeit durchgeführt wird und/oder keine Zwischenspeicherung der Daten der empfangenen spezifischen Datenströme in einem nicht-flüchtigen Speicher aufweist.

12. Verfahren nach einem der vorangehenden Ansprüche, wobei die Datenaufzeichnung aufweist, dass Metadaten, die Informationen zu den auf den einzelnen Speichermedien gespeicherten elementaren Dateneinheiten, zur Wiederherstellung der einzelnen spezifischen Datenströme aus den über die zumindest zwei Speichermedien verteilt gespeicherten elementaren Dateneinheiten, aufweisen, erzeugt werden,
wobei vorzugsweise die Metadaten eine Auswahl folgender Informationen enthalten:
- Informationen zur Datenaufzeichnung, wie eine eindeutige Kennung der Datenaufzeichnung und/der eine eindeutige Kennung des für die Datenaufzeichnung eingesetzten Systems;
- Speicheradressbereiche der einzelnen elementaren Dateneinheiten, insbesondere jeweils Zeiger auf das erste und letzte Byte der jeweiligen elementaren Dateneinheiten;
- eindeutige Kennungen zur Identifizierung einzelner elementarer Dateneinheiten;
- Zuordnungen der einzelnen elementaren Dateneinheiten zu Quellen, insbesondere Sensoren;
- Informationen zur zeitlichen Sortierung der elementaren Dateneinheiten, etwa in Form von Zeitstempeln, eine oder mehrere Listen der eindeutigen Kennungen in einer chronologischen Reihenfolge;
- eine eindeutige Kennung der Datenaufzeichnungssession;
- eindeutige Kennungen der an der Datenaufzeichnung beteiligten Speichermedien;
- eindeutige Kennungen von an den Speichermedien angeordneten Tags;
- eine Liste mit Quellen, von denen die spezifischen Datenströme stammen;
- eine Liste mit den an der Datenaufzeichnung beteiligten Speichermedien, insbesondere zur Überprüfung, ob die aufgenommenen Daten vollständig vorliegen;
- Name und Pfad einer Zieldatei, in der Daten rekonstruierter Datenströme hinterlegt werden sollen;
und/oder
- Start- und Endzeitpunkt der Datenaufzeichnung.

13. Verfahren zur Erzeugung zumindest eines Datenstroms, insbesondere mit einem Verfahren nach einem der vorangehenden Ansprüche, aus über zumindest zwei Speichermedien oder Quelldateien verteilt gespeicherten elementaren Dateneinheiten, wobei anhand von Metadaten zumindest zwei elementare Dateneinheiten von unterschiedlichen Speichermedien oder aus unterschiedlichen Quelldateien abgerufen und in eine zeitliche Reihenfolge gebracht werden, und dadurch der zumindest eine Datenstrom zumindest teilweise erzeugt wird,
wobei vorzugsweise anhand der Metadaten (i) zumindest zwei Datenströme aus jeweils zumindest zwei elementaren Dateneinheiten zumindest teilweise erzeugt werden, wobei vorzugsweise jeder der erzeugten Datenströme in einer eigenen Zieldatei gespeichert wird oder zumindest zwei der erzeugten Datenströme in einer gemeinsamen Datei gespeichert werden, und/oder (ii) geprüft wird, ob alle der zumindest zwei Speichermedien oder alle der zumindest zwei Quelldateien, insbesondere für das Abrufen der auf oder in diesen gespeicherten elementaren Dateneinheiten, verfügbar sind.

14. Vorrichtung zur Datenverarbeitung, insbesondere zur Datenaufzeichnung, die mit einem oder mehreren Sensoren datentechnisch gekoppelt oder koppelbar ist und/oder die mit zumindest zwei Speichermedien datentechnisch gekoppelt oder koppelbar ist, die Vorrichtung aufweisend Mittel, die dazu eingerichtet sind, ein Verfahren nach einem der Ansprüche 1 bis 12 auszuführen und/oder Vorrichtung zur Datenverarbeitung, insbesondere zur Rekonstruktion eines, insbesondere mit einer Vorrichtung gemäß der ersten Alternative dieses Anspruchs aufgezeichneten, Datenstroms, die mit zumindest zwei Speichermedien datentechnisch gekoppelt oder koppelbar ist, die Vorrichtung aufweisend Mittel, die dazu eingerichtet sind, ein Verfahren nach Anspruch 13 auszuführen.

15. Computerprogrammprodukt, umfassend Befehle, die bei der Ausführung des Programms durch eine Vorrichtung zur Datenverarbeitung, insbesondere eine der Vorrichtungen zur Datenverarbeitung nach Anspruch 14, diese veranlassen, ein Verfahren nach einem der Ansprüche 1 bis 12 oder nach Anspruch 13 auszuführen.
